(19) Europäisches Patentamt
European Patent Office
Office européen des brevets

(11) **EP 1 948 752 B1**

(12) **EUROPÄISCHE PATENTSCHRIFT**

(45) Veröffentlichungstag und Bekanntmachung des Hinweises auf die Patenterteilung:
**27.01.2010 Patentblatt 2010/04**

(21) Anmeldenummer: **06819216.0**

(22) Anmeldetag: **01.11.2006**

(51) Int Cl.:
*C09J 133/00* (2006.01)      *C09J 5/00* (2006.01)

(86) Internationale Anmeldenummer:
**PCT/EP2006/068018**

(87) Internationale Veröffentlichungsnummer:
**WO 2007/054456 (18.05.2007 Gazette 2007/20)**

(54) **VERFAHREN ZUR HERSTELLUNG VON HAFTKLEBEMASSEN HOHER ANISOTROPIE**

METHOD FOR PRODUCING LOW ANISOTROPY PRESSURE-SENSITIVE ADHESIVES

PROCEDE POUR PRODUIRE DES MATIERES AUTO-ADHESIVES A ANISOTROPIE ELEVEE

(84) Benannte Vertragsstaaten:
**AT BE BG CH CY CZ DE DK EE ES FI FR GB GR HU IE IS IT LI LT LU LV MC NL PL PT RO SE SI SK TR**

(30) Priorität: **10.11.2005 DE 102005054032**

(43) Veröffentlichungstag der Anmeldung:
**30.07.2008 Patentblatt 2008/31**

(73) Patentinhaber: **TESA SE**
**20253 Hamburg (DE)**

(72) Erfinder:
• **DOLLASE, Thilo**
**22397 Hamburg (DE)**
• **DIETZ, Bernd**
**22949 Ammersbek (DE)**
• **KEITE-TELGENBÜSCHER, Klaus**
**22529 Hamburg (DE)**

(56) Entgegenhaltungen:
**EP-A- 1 312 658    WO-A-02/02709**

**Beschreibung**

Die vorliegende Erfindung betrifft ein Verfahren zur Herstellung von Haftklebemassen hoher Anisotropie, welches eine Masseversorgung, geeignete Auftragswerke und geeignete Auflegeelemente umfasst, wobei während des Prozesses eine freie Schmelzefahne der Haftklebemasse gebildet wird, die einen Reckprozess erfährt. Erfindungsgemäß wird der Reckprozess der freien Schmelzefahne über ein Wirkverhältnis Γ, welches durch die Wirkzeit des Reckprozesses Δt zur Reckrate R gekennzeichnet ist, gesteuert. Weiterhin betrifft die Erfindung die Verwendung der erfindungsgemäß hergestellten anisotropen Haftklebemassen in haftklebrigen Produkten.

Dank ihrer permanenten Klebrigkeit finden haftklebrige Produkte vielfältige Einsatzgebiete wie beispielsweise in der verarbeitenden Industrie und in privaten Haushalten. Je nach Anwendung bestehen unterschiedliche Anforderungen an die Kombination aus adhäsiven und kohäsiven Eigenschaften der Haftklebemasse. Typischerweise lässt sich das geforderte Eigenschaftsprofil einer Haftklebemasse und damit ihre Nützlichkeit für eine oder mehrere Anwendungen durch die Auswahl der Rohstoffe und ihrer Formulierung kontrollieren. Wichtige Bestandteile in einer Haftklebemassenrezeptur sind Polymere mit ausreichend geringer Erweichungstemperatur und hoher Molmasse, die der Haftklebemasse einen geeigneten viskoelastischen Charakter verleihen. Als Beispiele seien an dieser Stelle Kautschuke und Polyacrylate genannt. Zudem lassen sich die Eigenschaften von Haftklebemassen durch die Einstellung des Vernetzungszustands variieren. Damit ergeben sich vielfältige Möglichkeiten, Haftklebemassen für viele solcher unterschiedlichen Anforderungen zur Verfügung zu stellen. Es wird eine Fülle verschiedener haftklebriger Produkte angeboten, die zum Teil universell für zahlreiche auch unterschiedliche Anwendungen einsetzbar sind und zum Teil auf spezielle Anwendungen maßgeschneidert sind.

Neben dem Einfluss der Rohstoffe hat aber auch die Verarbeitung der Haftklebemasse einen Einfluss auf die späteren Eigenschaften im haftklebrigen Produkt. Der Grund hierfür liegt darin, dass die Struktur der Rohstoffe im beschichteten Haftklebemassenfilm von Prozess zu Prozess oder je nach Prozessführung unterschiedlich sein kann. Dies ergibt sich aus den für einen gegebenen Verarbeitungsprozess charakteristischen Strömungsprofilen, die zu Deformation und Orientierung diesbezüglich beeinflussbarer Bestandteile der Formulierung wie insbesondere Polymerketten durch Scherung und/oder Dehnung führen können [M. Pahl, W. Gleißle, H.-M. Laun, Praktische Rheologie der Kunststoffe und Elastomere, 4. Aufl., 1995, VDI-Verlag, Düsseldorf, S. 337ff]. Ein Resultat solcher Deformation ist die Formierung orientierter Polymerketten [I. M. Ward in Structure and Properties of Oriented Polymers, I. M. Ward (Hrsg.), 2. Aufl., 1997, Chapman & Hall, London]. Der orientierte Zustand ist mit einer strukturellen Anisotropie verknüpft. Unter Anisotropie versteht man den Umstand, dass der Wert einer physikalischen Eigenschaft eines Mediums je nach Betrachtungsrichtung unterschiedliche Werte aufweist und nicht, wie im Falle der Isotropie, in alle Raumrichtungen betrachtet gleich ist. Von besonderem Interesse sind dabei optische, elektrische, magnetische oder mechanische aber auch klebtechnische Materialgrößen.

Innerhalb eines beliebigen Verarbeitungsprozesses ist das zu verarbeitende Haftklebemassensystem typischerweise einer Fließströmung ausgesetzt. Je nach Durchsatz und Geometrie des vom Haftklebemassensystem eingenommenen oder des dem Haftklebemassensystem zur Verfügung gestellten Raums ergeben sich Strömungsprofile, denen in unterschiedlicher Ausprägung Scherströmungen und/oder Dehnströmungen zu Grunde liegen. Der Charakter einer Scherströmung herrscht im Idealfall immer dann vor, wenn sich die äußeren Begrenzungen des Haftklebemassenstroms, also beispielsweise die Kanalwände, während des Massetransports über eine betrachtete Weglänge nicht ändern. Rohrströmung kann ein Beispiel für diesen Idealfall sein. Dehnströmung dagegen tritt immer dann auf, wenn die Strömungsbegrenzungen konvergieren oder divergieren. Dies ist beispielsweise bei allen Arten von Verjüngungen des Massestroms der Fall. Reine Scherströmung und reine Dehnströmung herrschen in realen Prozessen jedoch nur selten vor. Vielmehr ist für den Großteil der Prozesssegmente in einem realen Haftklebemassenbeschichtungsprozess von einer Überlagerung von Scher- und Dehnströmung auszugehen.

Die Herstellung von haftklebrigen Produkten umfasst stets einen Beschichtungsschritt, bei dem die fluide Haftklebemasse zum Beispiel in Form ihrer Schmelze oder deren Lösung oder Dispersion in eine flächige Form überführt wird. Innerhalb dieses Verarbeitungsschritts treten in besonders ausgeprägter Weise scherende und/oder dehnende Einflussfaktoren auf das zu prozessierende Fluid in Erscheinung. In klassischen Verfahren werden Haftklebemassenlösungen beispielsweise durch Walzen- oder Rakelverfahren auf ein kontinuierlich gefördertes Trägermaterial aufgebracht. Das Lösungsmittel dient dabei als Prozesshilfsmittel, das die Fließeigenschaften, also die Viskosität aber auch die Elastizität, des zu verarbeitenden Materials so einstellt, dass bei der Beschichtung eine Haftklebemassenschicht von hoher Oberflächenqualität resultiert. Aus Kostengründen und einem gesteigerten Umweltbewusstsein heraus besteht ein Trend, die im Verarbeitungsprozess eingesetzte Lösungsmittelmenge zu reduzieren oder gänzlich zu eliminieren. Daher wurden in der Vergangenheit Beschichtungsverfahren entwickelt, bei denen zum Teil vollkommen auf Lösungsmittel verzichtet werden kann. Zu solchen Technologien zählen Hotmelt- und Extrusionsprozesse, bei denen die Haftklebemassen aus der Schmelze verarbeitet werden. Die hochmolekularen Polymerbestandteile in den zu verarbeitenden Haftklebemassenformulierungen stellen dabei an die Verfahren, auf Grund ihrer Eigenschaft hohe Schmelzviskositäten aufzuweisen, besonders hohe Anforderungen. Beispiele für Beschichtungsverfahren, die für lösungsmittelfreie Beschichtungen beschrieben werden, sind in US 3,783,072 durch Johnson & Johnson, in DE 199 05 935 durch Beiersdorf sowie in US 6,455,152 und EP 622 127 durch 3M offenbart.

Für viele hochwertige Anwendungen werden Haftklebemassen auf Polyacrylatbasis eingesetzt. Polyacrylate bieten im Gegensatz zu vielen anderen Elastomeren den Vorteil, dass sie durch radikalische Polymerisation und die Verwendung unterschiedlicher Comonomere auf flexible Weise einem geforderten Eigenschaftsprofil angepasst werden können. Zudem zeichnen sie sich durch gute Beständigkeit gegenüber verschiedenen äußeren Einflüssen aus. Auch für polyacrylatbasierende Haftklebemassen ist in den letzten Jahren ein Trend zu lösungsmittelfreien Beschichtungsverfahren und zu Haftklebemassensystemen, die lösungsmittelfrei beschichtet werden können, zu verzeichnen. Beispiele hierfür sind in US 5,391,406 durch National Starch, in EP 377 199 durch BASF, in WO 93/09152 durch Avery Dennison, in DE 39 42 232 und DE 195 24 250 durch Beiersdorf sowie in DE 101 57 154 durch tesa AG beschrieben.

Grundsätzlich weisen alle Formulierungen, die langkettige Polymere enthalten, das Potenzial auf, anisotrope Strukturen auszubilden. Solche Strukturen können durch Deformation, die zu Kettenstreckung und molekularer Orientierung führt, erzeugt werden. Wichtige Beispiele, bei denen man sich die speziellen Eigenschaften orientierter Polymere zu Nutze macht, sind uniaxial orientierte Kunstfasern sowie mono- und biaxial orientierte Kunststofffolien. Der Sinn einer gezielten Verstreckung der genannten Materialien liegt bei solchen Fasern und Folien hauptsächlich in der Optimierung der Zug/Dehnungs-Eigenschaften wie zum Beispiel der Dehnbarkeit oder der Reißfestigkeit. Einige Prozesse zur Erzeugung von Orientierung und Phänomene, die mit Orientierung in Kunststofffilmen verbunden sind, sowie Möglichkeiten zur Messung von Orientierung wurden von J. L. White und M. Cakmak zusammengestellt [J. L. White, M. Cakmak, "Orientation"; "Orientation Processes", in Encyclopedia of Polymer Science and Engineering, Band 10, H. F. Mark, N. M. Bikales, C. G. Overberger, G. Menges, J. I. Kroschwitz (Hrsg.), 2. Aufl. 1985, Wiley, New York]. Ergänzend kann Mills zu Rate gezogen werden [P. J. Mills in Structure and Properties of Oriented Polymers, I. M. Ward (Hrsg.), 2. Aufl., 1997, Chapman & Hall, London].

Ein Verfahren, über das die gewünschte Orientierung und damit strukturelle Anisotropie in thermoplastischen Kunststofffilmen erzeugt wird, beinhaltet die Reckung einer Schmelzefahne, also den freien Massefilm zwischen Beschichtungsaggregat und Ablegeelement. Ein solcher Prozess wird beispielsweise in US 6,299,821 durch ExxonMobil, in DE 36 35 302 und in EP 515 863 durch Hoechst sowie in DE 33 26 056 durch Clopay beschrieben. Ein weiteres Verfahren, über das Orientierung erzeugt werden kann, besteht darin, einen freien Massefilm durch unterschiedlich schnell laufende Walzen zu recken. Dieses Verfahren wird zum Beispiel in EP 523 542 durch Hoechst beschrieben. Auch bei Haftklebemassen lässt sich Orientierung durch Prozesse erzeugen, in denen eine Schmelzefahne gereckt wird. Jedoch stellen sich die zu verarbeitenden Systeme, Folienformulierungen einerseits und Haftklebemassen andererseits, in ihrer Verarbeitbarkeit unterschiedlich dar. Während Thermoplasten, und insbesondere solche auf Basis teilkristalliner Polymere, beim Abkühlen zumindest partiell physikalisch vernetzen, ändert sich bei elastomerartigen Haftklebemassen beim Abkühlen das Phasenverhalten nicht.

Einige Verfahren, die zur Herstellung anisotroper Haftklebemassen beschrieben werden, wie z. B. DE 100 52 955 und DE 101 57 154 der tesa AG lehren, dass Walzen- und Schmelzdüsenprozesse, letztere als Kontaktverfahren oder als kontaktfreie Verfahren, oder bevorzugt Extrusionsverfahren entsprechend genutzt werden können. Als wichtige Prozessparameter, die zur Erzeugung von Orientierung und mithin Anisotropie im beschichteten Haftklebemassenfilm führen, werden die Reckung des Haftklebemassenfilms, die Variation der Bahngeschwindigkeit, die Schichtdicke des Haftklebemassenfilms, die Dauer zwischen Beschichtungsschritt und chemischer Vernetzung und die Temperatur der Beschichtungswalze sowie für den Fall der Düsenbeschichtung zusätzlich die Gestalt der Ausformung der Bügeldüse und der Lippenabstand am Austritt der Düse genannt.

So lässt sich der Einfluss des Verarbeitungsprozesses und insbesondere seines orientierenden Effekts auf die Eigenschaften auch für haftklebrige Produkte vorteilhaft nutzen. In DE 100 52 955 der tesa AG wird die Verwendung anisotroper Haftklebemassen für Stanzprodukte beschrieben. Extrusion einer Schmelze führt dabei zu struktureller Anisotropie, die im sich an die Beschichtung anschließenden Vernetzungsprozess "eingefroren" werden kann. Es resultieren Haftklebemassen mit mechanischer Anisotropie, die daher in speziellen Anwendungen vorteilhaft eingesetzt werden können. Ferner sind in US 5,866,249 und US 6,632,522 durch 3M anisotrope Haftklebemassen beschrieben, die abzugsrichtungsabhängige Klebkräfte aufweisen und damit für andere spezielle Anwendungen interessant erscheinen. Für spezielle Anwendungen und neuartige Eigenschaften ist also die Existenz anisotroper Haftklebemassen besonders attraktiv.

Der Erfindung lag deshalb die Aufgabe zugrunde, Herstellungsverfahren zu entwickeln, über die Anisotropie in möglichst hohem Grad in Haftklebemassen erzeugt werden kann. Es sollen Verfahren zur Verfügung gestellt werden, die es in ausgeprägterer Weise ermöglichen, höhere Anisotropie in Haftklebemassefilmen zu generieren, als es bei den Verfahren des Standes der Technik der Fall ist.

Es wurde überraschenderweise gefunden, dass diese Aufgabe gelöst werden kann, wenn die Verfahren zur Herstellung von Haftklebemassen im Verstreckungsprozess durch ein vorteilhaft eingestelltes definiertes Verhältnis $\Gamma$, das durch Wirkzeit $\Delta t$ des Reckprozesses zur Reckrate R in der Schmelzefahne gekennzeichnet ist, gesteuert werden.

So können überraschend orientierte Haftklebemassen hergestellt werden, in dem der Verstreckprozess in der Schmelzefahne bei der Beschichtung auf neuartige Weise durch Einstellen des Wirkverhältnisses $\Gamma$ ausgestaltet ist und so zu einer optimierten Erzeugung von Anisotropie führt. Über das erfindungsgemäße Verfahren, wie es weiterhin in der Beschreibung, den Beispielen und den Ansprüchen detailliert dargestellt ist, werden auf vorteilhafte Weise haftklebrige Produkte hergestellt, die Haftklebemassen mit gesteigerter Anisotropie enthalten.

Das erfindungsgemäße Verfahren zur Herstellung von Haftklebemassen mit hohem Anisotropiegrad umfasst eine Klebmasseversorgung unter Zuführung der einzelnen Komponenten eines Haftklebesystems einschließlich geeigneter Misch- und Förderaggregate, geeignete Auftragswerke und Auflegeelemente. Erfindungsgemäß sind alle Verarbeitungsprozesse zur Herstellung von Haftklebemassen einsetzbar, die eine freie Schmelzefahne (einen Schmelzefilm) erzeugen. Vorzugsweise wird das lösungsmittelfreie Schmelzmischen und Beschichten eines Trägermaterials angewandt. Die freie Schmelzefahne wird zwischen Austritt aus dem Auftragswerk und Auflagepunkt auf dem Ablegeelement gebildet, und erfährt in der Regel dort einen Reckprozess. Das Verfahren ist erfindungsgemäß dadurch gekennzeichnet, dass der Reckprozess der freien Schmelzefahne über das Wirkverhältnis $\Gamma$, welches durch die Wirkzeit des Reckprozesses $\Delta t$ zur Reckrate R gekennzeichnet ist, gezielt beeinflusst wird und so die Produktion von Haftklebemassen hoher Anisotropie gesteuert werden kann.

Die Wirkzeit $\Delta t$ wird definiert durch die Formel $2Lr/[v_{Bahn}(1+r)]$, in welcher L die Länge des Schmelzefilms, r das Reckverhältnis und $v_{Bahn}$ die Geschwindigkeit des Schmelzefilms bedeuten. Die Reckrate R ist als zeitliche Ableitung des Reckverhältnisses r definiert. Auf die einzelnen Komponenten wird im Weiteren noch näher eingegangen.

Das Verfahren zur Herstellung von Haftklebemassen hoher Anisotropie wird bevorzugt durchgeführt, indem die Parameter so gewählt werden, dass das Wirkverhältnis $\Gamma$ hoch ist und einen Wert von mindestens 0,006 $s^2$, vorzugsweise von mindestens 0,008 $s^2$ besitzt.

In einer weiteren Ausführungsvariante der Erfindung sollte der Verhältniswert klein gewählt werden und höchstens 0,004 $s^2$, vorzugsweise höchstens 0,002 $s^2$ betragen.

Für die erfindungsgemäße Herstellung anisotroper Haftklebemassen kommen Beschichtungsprozesse zum Einsatz, die eine Klebmasseversorgung, ein Auftragswerk, ein Medium, auf dem der Haftklebemassenfilm abgelegt wird, und optional eine Vernetzungsstation umfassen.

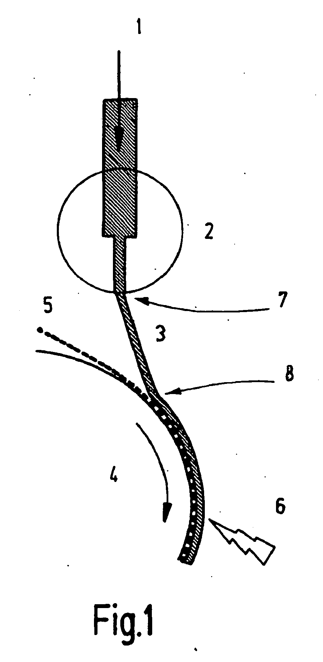

Abbildung 1 zeigt schematisch verschiedene bevorzugte Prozesssegmente, auf die in der vorliegenden Beschreibung eingegangen wird und die den erfindungsgemäßen Verfahrensablauf symbolisieren. Darin bedeuten

(1) Klebmassezuführung;
(2) Auftragswerk oder Beschichtungsaggregat;
(3) Schmelzefahne;
(4) Kühlwalze;
(5) optional einsetzbares, separat zugeführtes Ablegemedium;
(6) optional einsetzbare Vernetzungsstation;
(7) Austrittsspalt;
(8) Auflegepunkt.

Detail (8) ist dabei als Projektion der eigentlich vorliegenden Auflegelinie zu verstehen, die sich aus dem Ablegen der Schmelzefahne, also im Prinzip einer Fläche, auf einer weiteren Fläche, nämlich der Oberfläche einer Kühlwalze oder des optional einsetzbaren Ablegemediums, ergibt.

Die schematische Darstellung in Abbildung 1 ist eine Vorzugsvariante und nicht als ausschließliche Auslegungsform dieser Erfindung zu verstehen. Vielmehr kann die Anordnung einzelner Segmente relativ zueinander sowie deren Form anders sein als dargestellt. Winkel und Abmessungen sind nicht maßstabsgetreu.

Die erfindungsgemäßen Verfahren betreffen alle Verarbeitungsprozesse für Haftklebemassen, in denen beim Beschichtungsprozess eine Schmelzefahne involviert ist. Unter einer Schmelzefahne (Detail (3) in Abbildung 1) ist im Sinne dieser Erfindung ein an zumindest zwei Seiten freier Haftklebemassenfilm zu verstehen, der sich zwischen dem Austrittsspalt (Detail (7)) des Auftragswerks oder Beschichtungsaggregats (Detail (2)) einerseits und dem Auflegepunkt (Detail (8)) auf dem Ablegeelement andererseits befindet. Unter Ablegeelement sei im Sinne dieser Erfindung Detail (4) optional in Kombination mit Detail (5) verstanden. Durch Wahl einer Geschwindigkeitsdifferenz zwischen dem Massenstrom beim Austritt aus dem Auftragswerk und dem Auflegepunkt findet ein Reckvorgang statt. Dieser Reckprozess ist mit einer mehr oder weniger ausgeprägten Deformation des Haftklebemassenfilms verbunden. Die Natur der Deformation ist dabei im Wesentlichen durch Dehnung gegeben. Die Reckung von Filmen kann genutzt werden, um Schichtdicken einzustellen, wenn keine Austrittsspalte mit der gewünschten Abmessung zu Verfügung stehen oder kleinere Austrittsspalte aus anderen Gründen, wie z. B. einem unzulässigen Druckaufbau im Beschichtungsaggregat, nicht eingesetzt werden. Zusätzlich tritt aber innerhalb des Films auch molekulare Orientierung strukturell anisotroper Formulierungsbestandteile sowie Kettenstreckung flexibler Polymermoleküle auf, so dass ein anisotroper Haftklebemassenfilm resultiert. Die Anisotropie erreicht im Auflegepunkt einen Maximalwert. Durch das erfindungsgemäße Verfahren wird dieser Maximalwert der Anisotropie im Auflegepunkt weiter maximiert, was zu einer Verbesserung der anisotropen Eigenschaften der Haftklebemasse und/oder eines oder mehrerer ihrer Bestandteile führt.

In den erfindungsgemäßen Verfahren wird die Haftklebemasse während des Beschichtungsschritts innerhalb der Schmelzefahne im Wesentlichen einer planaren Dehnung unterworfen. Für einen planaren Dehnungsprozess eines inkompressiblen Fluids gilt, dass diejenige Dimension eines Volumenelements des Fluids, die zur Dehnrichtung parallel ist (im Verfahren durch die Maschinenrichtung gegeben), im selben Verhältnis zunimmt, um das eine weitere Dimension reduziert wird (im Prozess die normale Richtung, Filmdicke ), während die dritte Dimension (im Prozess die transversale Richtung, Bahnbreite) unverändert bleibt. Eine derartige Reckung der Schmelzefahne ist dabei durch das Verhältnis aus dem Austrittsspalt D (Detail (7) in Abbildung 1) des Auftragswerks und der Schichtdicke d des Haftklebemassenfilms im Auflegepunkt (Detail (8) in Abbildung 1) gegeben. Dieses Verhältnis sei hier Reckverhältnis r mit

$$r = D/d = v_{Bahn}/v_0 \qquad\qquad (1)$$

genannt. In Gleichung (1) ist $v_{Bahn}$ die Bahngeschwindigkeit und $v_0$ die Geschwindigkeit des Haftklebemassenfilms in Punkt (7). Je höher der Wert des Reckverhältnisses, desto höher ist die Dehnbeanspruchung des Haftklebemassenfilms in der Schmelzefahne. Das verdeutlicht den qualitativen Einfluss von Schichtdicke des Haftklebemassenfilms im Auflegepunkt und vom Austrittsspalt des Auftragswerks. In einer Ausführungsvariante der Erfindung wird deshalb der Parameter Reckverhältnis so voreingestellt, dass auch von ihm aus bereits ein großer Effekt im Hinblick auf die Erzeugung hoher Orientierung und Kettenstreckung ausgeht. In einer bevorzugten Ausgestaltung des erfinderischen. Verfahrens werden die Parameter Höhe des Düsenspalts D und Schichtdicke d des Haftklebemassenfilms im Auflegepunkt so gewählt, dass ein möglichst hohes Reckverhältnis resultiert. Erfindungsgemäße Reckverhältnisse liegen bei mindestens 2:1, bevorzugt bei mindestens 4:1, sehr bevorzugt bei mindestens 6:1.

Bevorzugt werden solche Reckverhältnisse durch einen besonders großen Austrittsspalt D realisiert. Dieser Austrittsspalt ist im Sinne dieser Erfindung vorzugsweise mindestens 150 μm groß, besonders bevorzugt mindestens 300 μm groß, sehr bevorzugt mindestens 600 μm groß.

Die Schichtdicke d von Haftklebemassen ist abhängig vom gewünschten Produkt und liegt i.d.R. vorzugsweise zwischen 1 μm und 2000 μm, besonders bevorzugt zwischen 5 μm und 1000 μm.

- Tabelle 1 -

| Größe | Symbol | Bedeutung |
|---|---|---|
| Wirkzeit | $\Delta t$ | Aufenthaltszeit der Haftklebemasse in der Schmelzefahne. |
| Reckrate | R | Zeitliche Ableitung des Reckverhältnisses. |
| Erfinderisches Wirkverhältnis | $\Gamma = \Delta t/R$ | Verhältnis aus Wirkzeit und Reckrate. |
| Plateaumodul | $G_N^0$ | Speichermodul im gummielastischen Regime. Materialspezifische Größe. |
| Längste Relaxationszeit | $T_D$ | Entschlaufungszeit. Materialspezifische Größe. |
| Verschlaufungsgrad | Z | Anzahl an Verschlaufungen pro Kette. Materialspezifische Größe. |
| Maximale Kettenstreckbarkeit | $\lambda_{max}$ | Materialspezifische Größe. |
| Schichtdicke | d | Filmdicke des Haftklebemassenfilms im Auflagepunkt des Ablegeelements. |
| Austrittsspalt | D | Filmdicke des Haftklebemassenfilms beim Austritt aus dem Beschichtungsaggregat. |
| Reckverhältnis | r | Verhältnis aus Austrittsspalt des Auftragswerks und der Schichtdicke des Haftklebemassenfilms im Auftragspunkt des Auflegemediums. |
| Bahngeschwindigkeit | $v_{Bahn}$ | Transportgeschwindigkeit des Ablegemediums. |
| Anfangsgeschwindigkeit | $v_0$ | Massengeschwindigkeit beim Austritt aus dem Auftragswerk (Punkt (7) in Abb. 1. |
| Länge der Schmelzefahne | L | Länge des freien Haftklebemassenfilms zwischen Punkten (7) und (8) in Abb. 1. |

(fortgesetzt)

| Größe | Symbol | Bedeutung |
|---|---|---|
| Kettenstreckung | $\Lambda$ | Maß für Anisotropie. |
| Molekulare Orientierung | $\Omega$ | Verhältnis aus Vorzugsorientierung der Ellipsoidlängsachsen entlang der Maschinenrichtung und Vorzugsorientierung entlang der Transversalrichtung. Maß für Anisotropie. |

Tatsächlich stellt die planare Dehnung einen Idealfall für eine auftretende Deformation dar. In realen Prozessen findet neben einer Schichtdickenreduktion typischerweise eine gewisse Einschnürung des Haftklebemassenfilms während der Reckung, also eine Verjüngung der Breite der Haftklebemassenschicht nach Austritt aus dem Beschichtungsaggregat statt. Ist diese Einschnürung dem Betrag nach im Vergleich zur Bahnbreite in Beschichtungsprozessen klein, dann kann die Beschreibung des Reckprozesses über den Formalismus der planaren Dehnung in guter Näherung erfolgen. Es sind auch alle diejenigen Prozesse erfindungsgemäß, die die Reckung einer Schmelzefahne beinhalten und die außerdem eine Einschnürung des Haftklebemassenfilms aufweisen.

Als bevorzugte erfinderische Stellgröße, die besonders vorteilhaft verwendet werden kann, um die Anisotropie in Haftklebemassen in Beschichtungsprozessen zu erhöhten Werten zu führen, wurde überraschend die Länge der Schmelzefahne gefunden. Diese Prozessgröße beeinflusst zum einen die Verweilzeit der Haftklebemasse in der Schmelzefahne $\Delta t$ ("Wirkzeit") sowie zum anderen die Reckrate R. Erfindungsgemäß wird deshalb bevorzugt über die Länge der Schmelzefahne Einfluss auf diese beiden Verfahrensgrößen genommen, so dass maximierte Anisotropiewerte für Haftklebemassen erreicht werden. Die überraschend gefundene vorteilhafte Nutzbarkeit der Länge der Schmelzefahne zur Lösung der Aufgabe, Haftklebemassen mit erhöhter Anisotropie zur Verfügung zu stellen, soll im weiteren Verlauf dieser Beschreibung durch einen formelmäßigen Ansatz untermauert und plausibel gemacht werden.

Der erfinderische Ansatz, insbesondere die Länge der Schmelzefahne als Stellgröße zu verwenden, ist besonders vorteilhaft, da sich ihre Länge prozesstechnisch, nämlich vor Prozessbeginn durch Anfahren des Auftragswerks an eine entsprechende Position relativ zum Ablegemedium, leicht justieren lässt, während andere Prozessparameter wie beispielsweise die Bahngeschwindigkeit oft durch andere Vorgaben wie z. B. durch die erreichbare Strahlendosis in der Vernetzungsstation limitiert sein können. Es ist ebenfalls erfindungsgemäß, wenn gleichzeitig zwei oder mehr Parameter geändert werden und zwar immer einschließlich der Länge der Schmelzefahne. Auf diese Weise sind also unterschiedliche Einstellungen möglich, die alle bevorzugte vorteilhafte Ausgestaltungen des erfindungsgemäßen Verfahrens sind.

Es wurde bereits ausgeführt, dass die Länge der Schmelzefahne zwei Verfahrensgrößen beeinflusst, nämlich die Wirkzeit und die Reckrate. Beide Verfahrensgrößen haben einen unterschiedlichen Einfluss auf die Entstehung von Anisotropie in Haftklebemassen während des Prozessierens. Deshalb kann die Länge der Schmelzefahne auf zweierlei Weise erfinderisch genutzt werden.

Teil dieser Erfindung sind deshalb Verfahrensvarianten, bei denen die Länge der Schmelzefahne im Prozess besonders *lang* vorgegeben wird. Dabei wird vorteilhaft Einfluss auf die Wirkzeit $\Delta t$ genommen, wie es im weiteren Verlauf der Beschreibung genauer ausgeführt wird. Eine erfinderisch lange Schmelzefahne führt zu tendenziell höheren Wirkzeiten. Eine gesteigerte Wirkzeit ermöglicht die Ausbildung höherer Anisotropiegrade in Haftklebemassen.

Innerhalb der Wirkzeit $\Delta t$ bietet sich dem deformierenden Charakter des Reckvorgangs die Möglichkeit, mit der Haftklebemasse oder einem oder mehrerer ihrer Bestandteile zu interagieren und damit auf die Erzeugung von Anisotropie hinzuwirken. Es sind daher auch alle Beschichtungsprozesse vorteilhaft im Sinne dieser Erfindung einsetzbar, die eine besonders lange Verweilzeit der Haftklebemasse während des Reckvorgangs, also in der Schmelzefahne aufweisen. Je länger die Schmelzefahne ist, desto länger ist auch die Wirkzeit $\Delta t$ bei konstanter Bahngeschwindigkeit.

Die Größe, die diesen erfindungsgemäßen Ansatz plausibel macht, ist dasjenige Zeitinkrement, während dessen sich ein Volumenelement der Haftklebemasse in der Schmelzefahne befindet. Dieses Zeitinkrement wird in diesem Zusammenhang als Wirkzeit $\Delta t$ bezeichnet und sei für den Auflegepunkt (Detail (8) in Abbildung 1) durch

$$\Delta t = 2Lr / [v_{Bahn} (1 + r)] \qquad\qquad (2)$$

gegeben. In Gleichung (2) stellt L die Länge der Schmelzefahne, $v_{Bahn}$ die Bahngeschwindigkeit und r das Reckverhältnis dar. Gleichung (2) lässt sich aus Überlegungen zur gleichmäßig beschleunigten Bewegung ableiten (siehe hierzu beispielsweise H. Stöcker (Hrsg.), Taschenbuch der Physik, 2. Auflage, 1994, Verlag Harri Deutsch, Frankfurt a. M., S. 12). Grundlagen bilden die beiden Bewegungsgesetze

$$s(t) = at^2/2 + v_0t + s_0 \qquad\qquad (3)$$

und

$$v(t) = at + v_0 \qquad\qquad (4)$$

wobei $s(t)$ die zeitabhängige Ortskoordinate ist, a die Beschleunigung, $v_0$ die Geschwindigkeit zu Beginn des betrachteten Prozesses, also bei Austritt des Haftklebemassenfilms aus dem Beschichtungsaggregat, $s_0 = 0$ gesetzt wird und $v(t)$ die zeitabhängige Geschwindigkeit darstellt. Durch Verwendung von Gleichung (4) lässt sich a in Gleichung (3) eliminieren. Betrachtet man den Auflegepunkt (8) in Abbildung 1, dann geht t in $\Delta t$, $s(t = \Delta t)$ in L und $v(t = \Delta t)$ in $v_{Bahn}$ über. Setzt man diese Randbedingungen ein, dann ergibt sich nach einiger Algebra

$$L = v_{Bahn} \, \Delta t \, (r + 1) / 2r \qquad\qquad (5)$$

woraus sich Gleichung (2) als Bestimmungsgleichung für die Wirkzeit ableiten lässt. Der hier angegebene Formalismus soll zur Verdeutlichung der Intention dieser Erfindung dienen. Dem Fachmann ist offensichtlich, dass Reckprozesse vom Idealfall der gleichförmig beschleunigten Bewegung abweichen können. Es sind daher nicht nur solche Verfahren erfinderisch, die der obigen Beschreibung vollständig entsprechen, sondern auch solche, die durch die weiteren Ausführungen in dieser Beschreibung und den Ansprüchen definiert sind.

Im Sinne der Erfindung ist es besonders vorteilhaft, ggf. auch alle anderen Prozessparameter, die einen positiven Einfluss auf die Anisotropieerzeugung haben, in optimierter Weise einzustellen. Als Beispiel sei diesbezüglich ein hohes Reckverhältnis genannt. Diese erfinderische Ausgestaltung lässt sich vorteilhaft weiter entwickeln, indem im Prozess eine auf ein optimales Maß reduzierte Bahngeschwindigkeit in Kombination mit einer auf einen ebenfalls reduzierten und auf geeignete Weise an die Bahngeschwindigkeit angepassten Durchsatz verwendet wird, so dass auch über diese Verfahrensparameter die Wirkzeit gesteigert wird. Die besonders lange Schmelzefahne erlaubt dann, dass diese Einflussparameter optimal auf die Haftklebemasse oder einen oder mehrere ihrer Bestandteile wirken kann, so dass über diesen erfindungsgemäßen Weg vorteilhaft hohe Anisotropiegrade erzeugt werden können.

Erfindungsgemäß beträgt die Wirkzeit vorzugsweise mindestens 0,01 s, besonders bevorzugt mindestens 0,1 s, sehr bevorzugt mindestens 0,25 s.

Im Sinne der Erfindung weist die Länge der Schmelzefahne einen Betrag von vorzugsweise größer als 40 mm, besonders bevorzugt von größer als 75 mm, sehr bevorzugt von größer als 100 mm auf.

In der vorstehend beschriebenen bevorzugten Auslegung dieser Erfindung wurde der Einfluss der Länge der Schmelzefahne auf die Anisotropieerzeugung in Haftklebemassen dargestellt. In jenem Sinne wurde eine besonders lange Schmelzefahne bereits als vorteilhaft im Sinne der Erfindung genannt.

Es ist jedoch in einer weiteren vorteilhaften Ausgestaltung dieser Erfindung möglich, die gewünschte optimierte Anisotropieerzeugung in Haftklebemassen auch dadurch zu realisieren, dass eine besonders kurze Schmelzefahne zum Einsatz kommt.

Teil dieser Erfindung sind daher auch Verfahren, bei denen die Länge der Schmelzefahne besonders *kurz* ausgestaltet ist. Dabei wird bevorzugt Einfluss auf die Reckrate R genommen, wie im weiteren Verlauf der Beschreibung deutlich wird. Eine kurze Schmelzefahnenlänge führt zu erhöhten Reckraten. Über höhere Reckraten lassen sich deshalb erfindungsgemäß gesteigerte Grade an Anisotropie in Haftklebemassen erzeugen.

Die Reckrate R hat einen Einfluss auf den Grad der erzeugten Anisotropie der Haftklebemasse im Auflegepunkt, da diese direkt auf den zeitlichen Verlauf und die Effektivität des Dehnprozesses und damit die Deformation des Haftklebemassenfilms einwirkt. Je höher die Reckrate, desto höher ist der Grad an Anisotropie, der prinzipiell erreicht werden kann. In einer bevorzugten Ausgestaltung dieser Erfindung erfolgt die Steuerung der Anisotropieerzeugung im Haftklebemassenfilm über die Reckrate und hier speziell auch durch die Einstellung der Länge der Schmelzefahne. Allgemein stellt die Reckrate die zeitliche Ableitung des Reckverhältnisses r dar. Sie lässt sich für den Auflegepunkt (Detail (8) in Abbildung 1) durch

$$R = v_{Bahn} \, (r - 1) \, / \, (Lr) \qquad\qquad (6)$$

wiedergeben, wobei $v_{Bahn}$, die Geschwindigkeit des Ablegemediums beschreibt, L die Länge der Schmelzefahne und r das Reckverhältnis. Wie schon Gleichung (2) resultiert auch Gleichung (6) aus Überlegungen zu gleichmäßig beschleunigten Bewegungen. Die Reckrate R hängt im Auflegepunkt (Detail (8) in Abbildung 1), an dem $t = \Delta t$, $s(t = \Delta t) = L$ und $v(t = \Delta t) = v_{Bahn}$ gelten, dabei nur von der Differenzgeschwindigkeit, die in der Schmelzefahne vorherrscht, also $\Delta v = v_{Bahn} - v_0$, ab. Für diesen Punkt lässt sich

$$R = \Delta v \, / \, L = (v_{Bahn} - v_0) \, / \, L \qquad\qquad (7)$$

formulieren. Statt $v_0$ wird $v_{Bahn}/r$ verwendet, so dass schließlich Gleichung (6) resultiert. Wie zuvor für die Wirkzeit basiert der hier vorgestellte Formalismus auf der Annahme, dass sich der erfinderische Prozess durch eine gleichförmig beschleunigte Bewegung darstellen lässt. Jedoch dient diese Ausführung lediglich dazu, die intention dieser Erfindung zu untermauern und zu erläutern. Die Verwendung dieses Formalismus zu diesem Zweck beschränkt dabei nicht die Menge der erfinderisch anwendbaren Prozesse auf diejenigen Verfahren, die sich vollständig darüber beschreiben lassen. Vielmehr sind auch andere Verfahren erfindungsgemäß und zwar alle diejenigen, die durch die weiteren Ausführungen in der Beschreibung und den Ansprüchen definiert sind.

Im Sinne der Erfindung ist es zur Erzeugung hoher Anisotropie besonders vorteilhaft, vorzugsweise auch alle anderen Prozessparameter, die einen positiven Einfluss darauf haben, in optimierter Weise einzustellen. Als Beispiel sei diesbezüglich ein hohes Reckverhältnis genannt. Stattdessen oder auch zusätzlich kann vorteilhaft auch eine hohe Bahngeschwindigkeit gewählt werden.

Erfindungsgemäß kommen Reckraten zum Einsatz, die vorzugsweise mindestens $1 \text{ s}^{-1}$, bevorzugt mindestens $10 \text{ s}^{-1}$, sehr bevorzugt mindestens $25 \text{ s}^{-1}$ betragen.

Im Sinne dieser Erfindung weist in dieser bevorzugten Ausgestaltung der Erfindung die Länge der Schmelzefahne einen Betrag von kleiner als 40 mm, bevorzugt von kleiner als 25 mm, sehr bevorzugt von kleiner als 15 mm auf.

Im vorstehenden Teil dieser Beschreibung wurde gezeigt, wie auf neue und vorteilhafte Weise über die Länge der Schmelzefahne in einem Beschichtungsprozess Einfluss auf die Erzeugung von Anisotropie in Haftklebemassen genommen werden kann. Dabei hat die Länge der Schmelzefahne einen unterschiedlichen Effekt auf die Größen Wirkzeit und Reckrate, die beide für sich, aber auch in Kombination mit der jeweils anderen und/oder optional auch in Kombination mit weiteren Verfahrensparametern zur Entstehung von Anisotropie in Haftklebemassen führen. Diese beiden Größen lassen sich nun, wie bereits ausgeführt, zu dem neuen Kriterium vereinen, dem erfinderischen Wirkverhältnis $\Gamma$, das durch

$$\Gamma = \Delta t \, / \, R \qquad\qquad (8)$$

gegeben ist. Setzt man in Gleichung (8) die jeweiligen Bestimmungsgleichungen für die Wirkzeit, Gleichung (2), und die Reckrate, Gleichung (7), ein, dann nimmt $\Gamma$ die Form

$$\Gamma = 2(Lr)^2 \, / \, [v_{Bahn}{}^2 \, (r^2 - 1)] \qquad\qquad (9)$$

an. Entsprechend den zuvor gemachten Ausführungen ergibt eine Erhöhung der Wirkzeit höhere Anisotropiegrade. Ebenso führt auch eine Erhöhung der Reckrate zu höheren Anisotropiegraden. Nach Gleichung (8) sind also alle Beschichtungsprozesse für Haftklebemassen erfindungsgemäß, die durch besonders große $\Gamma$-Werte beschrieben werden, wie auch solche Prozesse, die durch besonders kleine $\Gamma$-Werte charakterisiert sind.

Erfindungsgemäß sind alle Beschichtungsprozesse für Haftklebemassen, für die ein erfinderisches Wirkverhältnis $\Gamma$ von mindestens $0{,}006 \text{ s}^2$, bevorzugt von mindestens $0{,}008 \text{ s}^2$ entsprechend der zuvor gemachten Ausführungen und Näherungen formuliert werden kann.

Erfindungsgemäß sind außerdem alle Beschichtungsprozesse für Haftklebemassen, für die ein erfinderisches Wirkverhältnis $\Gamma$ von höchstens $0{,}004 \text{ s}^2$, bevorzugt von höchstens $0{,}002 \text{ s}^2$ entsprechend der zuvor gemachten Ausführungen und Näherungen formuliert werden kann.

Gleichung (9) zeigt deutlich den Einfluss der Länge der Schmelzefahne L auf das erfinderische Wirkverhältnis. Zudem erkennt man aus Gleichung (9), dass auch die Verfahrensparameter Bahngeschwindigkeit $v_{Bahn}$ und Reckverhältnis r einen wichtigen Einfluss auf das erfinderische Wirkverhältnis $\Gamma$ haben. Diese Parameter werden daher vorteilhafterweise in Kombination mit der Länge der Schmelzefahne im Beschichtungsprozess so ausgewählt, dass auch von ihnen ein optimaler Effekt auf $\Gamma$ und damit die Erzeugung von Anisotropie in Haftklebemassen ausgeht.

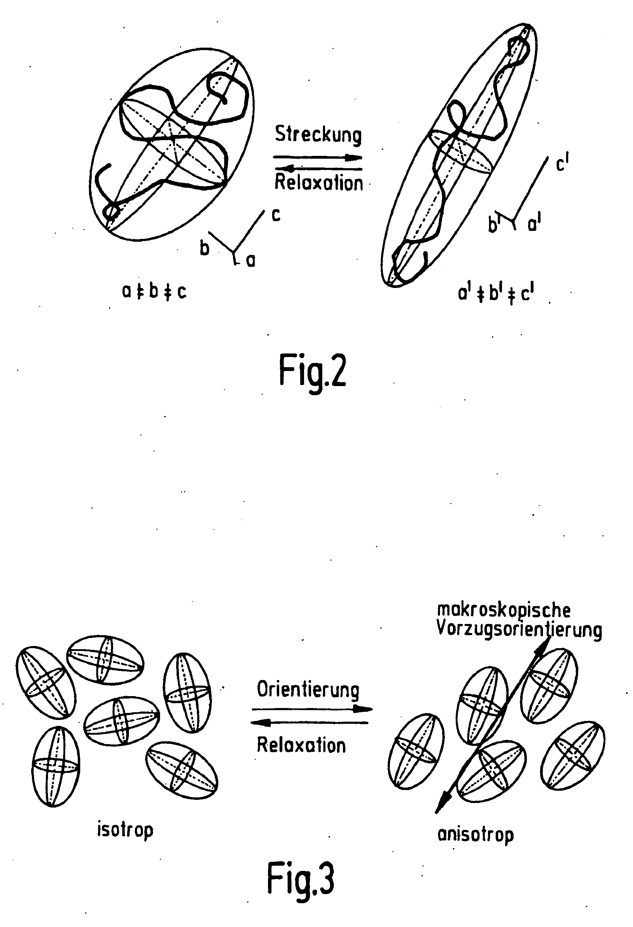

Die vorliegende Erfindung betrifft vorteilhaft bevorzugt Haftklebemassen, die im Rohzustand, also im chemisch oder strahlenchemisch unvernetzten Zustand, nicht-newtonsche Fluide und zwar insbesondere solche strukturviskoser Natur darstellen. Nicht-newtonsche Fluide, die Strukturviskosität aufweisen, zeichnen sich dadurch aus, dass sie oberhalb kritischer Scherraten eine Scherratenabhängigkeit der Viskosität zeigen. Strukturviskoses Verhalten ist mit einer Änderung der Struktur einzelner Bestandteile der Formulierung, insbesondere langkettiger Polymere bei Änderungen des Fließzustands verbunden. Für Polymere lässt sich dieses Verhalten modellhaft so beschreiben, dass sich die molekulare Struktur je nach Strömungszustand so ändert, dass ein gegenüber den nicht deformierten Polymeren geringerer Strömungswiderstand erreicht wird. Dies erfolgt zum einen durch Streckung einzelner Ketten sowie auch durch molekulare Orientierung. Die Einhüllende einer Polymerkette lässt sich allgemein durch einen Ellipsoid darstellen. Kettenstreckung ist mit einer Änderung der Ellipsoidgeometrie wie z. B. einer Elongation verknüpft (Abbildung 2), Orientierung mit der Ausrichtung mehrerer solcher Ellipsoide entlang einer Vorzugsrichtung (Abbildung 3). Auf Möglichkeiten zur Quantifizierung von Kettenstreckung und molekularer Orientierung und wie diese Größen als Kriterium für Anisotropie genutzt werden können, wird im Abschnitt "Beispiele" eingegangen. Ändert sich der Strömungszustand, dann passen sich die Struktur der Polymerketten und die Orientierung den neu gegebenen Verhältnissen an. Orientierungsprozesse und Kettenstreckungen sind Relaxationsvorgänge entgegengestellt, so dass beim Anhalten des Fließvorgangs ohne weitere äußere Stimulation eine Restrukturierung der Haftklebemasse abläuft und sich in Folge dessen wieder der strukturelle Gleichgewichtszustand einstellt, der auch vor Beginn des Fließprozesses vorherrschte. Diese "Rückreaktion" erfolgt allerdings nur, wenn das System eine gewisse innere Beweglichkeit behält. Entscheidend für das Orientierungs-, Kettenstreckungs- und Relaxationsverhalten von Polymeren in Haftklebemassen ist das nichtlineare rheologische Verhalten unter stationären Bedingungen, aber auch, da sich das Haftklebemassesystem in realen Prozessen typischerweise in einem sich ändernden Strömungsprofil bewegt, unter transienten Bedingungen. In guter Näherung wird das rheologische Verhalten solcher Haftklebemassen durch vier Materialparameter beschrieben, den Plateaumodul $G_N^0$, die längste Relaxationszeit $T_D$, den Verschlaufungsgrad pro Polymerkette Z und die maximale Kettenstreckbarkeit $\lambda_{max}$. Eine genauere Beschreibung dieser Größen geben Fang et al. [J. Fang, M. Kröger, H. C. Öttinger, J. Rheol., 2000, 44, 1293].

Im Allgemeinen ist der anisotrope Zustand durch die Existenz von Orientierung und Kettenstreckung charakterisiert. Der Grad der erreichbaren Anisotropie hängt von der Art und Zusammensetzung der Haftklebemasse ab. Nicht nur weil die hier beschriebenen Orientierungs- und Relaxationsphänomene wie alle rheologischen Vorgänge signifikant temperaturabhängig sind, stellt die Temperatur eine weitere wichtige Einflussgröße für die Evolution und den möglichen Abbau von Anisotropie dar. Im Sinne dieser Erfindung wird bevorzugt bei möglichst niedrigen Temperaturen beschichtet. Erfindungsgemäße Beschichtungstemperaturen hängen von der Art der zu beschichtenden Haftklebemasse ab und werden so gewählt, dass sich das Material beim Verlassen des Beschichtungsaggregats im strukturviskosen Fließregime befindet. Typischerweise befinden sich solche Beschichtungstemperaturen zwischen 25 °C und 250 °C, bevorzugt zwischen 50 °C und 200 °C. Die Temperatur der Kühlwalze (Detail (4) in Abbildung 1) wird ebenfalls so niedrig wie möglich gewählt. Erfinderisch sind bevorzugte Temperaturen von höchstens 60 °C, bevorzugt von höchstens 30 °C. Es ist vorteilhaft in einer Ausgestaltung der Erfindung, wenn der Haftklebemassenfilm zu einem beliebigen Zeitpunkt nach Verlassen des Auftragswerks gekühlt wird, vorzugsweise mit einem Kühlmedium beliebiger Art und/oder einem Kühlaggregat beliebiger Art.

Die Klebmasseversorgung in erfindungsgemäßen Verfahren erfolgt durch an sich übliche Aggregate zum Fördern viskoser Medien, bevorzugt durch in der Kunststoffverarbeitung sowie Klebebandindustrie gebräuchliche Extruder oder andere geeignete Aggregate zum Erweichen/Schmelzen und Fördern thermoplastischer Medien. Dies können zum Beispiel in der Klebstoffindustrie übliche Fassschmelzer, Premelter, Schmelzepumpen oder andere Schmelz- und Förderorgane sein, wobei auch Kombinationen verschiedener solcher Elemente zum Einsatz kommen können. Unter dem Begriff Extruder sind im Sinne dieser Beschreibung auch andere geeignete, oben genannte Schmelz- und Förderorgane zu verstehen. Auch die Kombination von Extruder und Schmelzepumpe ist erfindungsgemäß anwendbar, die in diesem Falle vorteilhaft zur Verbesserung der Förderkonstanz eingesetzt werden kann. Lieferanten solcher Schmelzepumpen sind zum Beispiel die Firmen Maag (Zürich, Schweiz) oder Witte (Itzehoe, Deutschland).

Als Auftragsverfahren kommt im Sinne dieser Erfindung bevorzugt eine Schlitzdüse zum Einsatz. Die erfindungsgemäß sehr bevorzugt verwendeten Extrusionsdüsentypen unterteilt man in die Kategorien T-Düse, Fischschwanz-Düse und Kleiderbügel-Düse. Die genannten Typen unterscheiden sich durch die Gestaltung ihres Fließkanals, woraus unterschiedliche Verweilzeiten und Verteilungsstrategien resultieren. Zur Herstellung von anisotropen Beschichtungen auf Basis von Polyacrylaten kommen bevorzugt Bügeldüsen zum Einsatz, wie sie z. B. von den Firmen Extrusion Dies, Inc. (Chippewa Falls, USA) oder Reiffenhäuser (Troisdorf, Deutschland) angeboten werden. Aber auch andere Beschichtungsverfahren, die mit einer Schmelzefahne arbeiten, wie z. B. das Hotmelt Curtain-Coating-Verfahren (Fa. Inatech, Langenfeld, Deutschland oder Fa. Nordson, Lüneburg, Deutschland) sind im erfindungsgemäßen Sinn einsetzbar. Ebenso sind Kombinationen aus einem Extrusionswerkzeug und einem Kalanderverfahren oder abgeleiteten Walzenauftragsverfahren wie Glättwerken oder weiteren Aggregaten mit Schmelzefahne gemeint, die mittels Extrusionswerkzeug eine Schmelzevordosierung in einen Kalanderspalt nutzen. Als Beispiele seien hier Roller-Head-Anlagen der Fa. Troester, Hannover, oder Kunststofffolienanlagen und Kunststoffplattenanlagen der Fa. Kuhne, St. Augustin, zu nennen.

Der in flächige Form ausgebrachte Haftklebemassenfilm wird vorzugsweise im erfindungsgemäßen Verfahren auf ein Träger- oder Releasematerial abgelegt.

Prinzipiell können zur Herstellung der Trägerfolie alle filmbildenden und extrusionsfähigen Polymere eingesetzt werden. In einer bevorzugten Auslegung werden Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

In einer weiteren bevorzugten Auslegung dieser Erfindung werden Polyvinylacetate eingesetzt. Polyvinylacetate können neben Vinylacetat auch Vinylalkohol als Comonomer enthalten, wobei der freie Alkoholanteil in weiten Grenzen variiert werden kann. In einer weiteren bevorzugten Auslegung dieser Erfindung werden Polyester als Trägerfolie eingesetzt. In einer besonders bevorzugten Auslegung dieser Erfindung werden Polyester auf Basis von Polyethylenterephthalat (PET) eingesetzt. In einer weiteren bevorzugten Auslegung dieser Erfindung werden Polyvinylchloride (PVC) als Folie eingesetzt. Zur Steigerung der Temperaturstabilität können die in diesen Folien enthaltenen Polymerbestandteile unter Verwendung versteifender Comonomere hergestellt werden. Weiterhin können die Folien im Zuge des erfinderischen Prozesses strahlenvernetzt werden, um eine ebensolche Eigenschaftsverbesserung zu erhalten. Kommt PVC als Folienrohstoff zum Einsatz, kann es optional plastifizierende Komponenten enthalten (Weichmacher). In einer weiteren bevorzugten Auslegung dieser Erfindung werden Polyamide zur Herstellung von Folien eingesetzt. Die Polyamide können aus einer Dicarbonsäure und einem Diamin oder aus mehreren Dicarbonsäuren und Diaminen bestehen. Neben Dicarbonsäuren und Diaminen lassen sich auch höher funktionelle Carbonsäuren und Amine auch in Kombination mit den oben genannten Dicarbonsäuren und Diaminen einsetzen. Zur Versteifung der Folie werden bevorzugt zyklische, aromatische oder heteroaromatische Ausgangsmonomere eingesetzt. In einer weiteren bevorzugten Auslegung dieser Erfindung werden Polymethacrylate zur Herstellung von Folien eingesetzt. Hier kann durch die Wahl der Monomere (Methacrylate und z. T. auch Acrylate) die Glasübergangstemperatur der Folie gesteuert werden. Weiterhin können die Polymethacrylate auch Additive enthalten, um z. B. die Flexibilität der Folie zu erhöhen oder die Glasübergangstemperatur herab- oder heraufzusetzen oder die Ausbildung von kristallinen Segmenten zu minimieren. In einer weiteren bevorzugten Auslegung dieser Erfindung werden Polycarbonate zur Herstellung von Folien eingesetzt. Ferner können in einer weiteren Auslegung dieser Erfindung auf Vinylaromaten und Vinylheteroaromaten basierende Polymere und Copolymere zur Herstellung der Trägerfolie eingesetzt werden. Zur Herstellung eines folienförmigen Materials kann es auch hier angebracht sein, Additive und weitere Komponenten hinzuzugeben, die die filmbildenden Eigenschaften verbessern, die Neigung zur Ausbildung von kristallinen Segmenten vermindern und/oder die mechanischen Eigenschaften gezielt verbessern oder auch gegebenenfalls verschlechtern.

Zur Herstellung der einsetzbaren bevorzugten Releasefolie können prinzipiell ebenfalls alle filmbildenden und extrusionsfähigen Polymere eingesetzt werden. Die Releasefolie besteht in einer bevorzugten Auslegung der Erfindung aus einer Trägerfolie, die beidseitig mit einem Releaselack, der bevorzugt auf Silikon basiert, ausgestattet ist. In einer sehr bevorzugten Auslegung der Erfindung sind die Releaselacke abgestuft, d. h. die Trennwerte unterscheiden sich auf der oberen und unteren Seite. Auf diesem Wege wird die Abrollbarkeit des doppelseitigen haftklebrigen Produkts oder haftklebrigen Zwischenprodukts gewährleistet in einer bevorzugten Auslegung dieser Erfindung werden als Trägermaterial für die Releasefolie Polyolefine eingesetzt. Bevorzugte Polyolefine werden aus Ethylen, Propylen, Butylen und/oder Hexylen hergestellt, wobei jeweils die reinen Monomere polymerisiert werden können oder Mischungen aus den genannten Monomeren copolymerisiert werden. Durch das Polymerisationsverfahren und durch die Auswahl der Monomere lassen sich die physikalischen und mechanischen Eigenschaften der Polymerfolie steuern, wie z. B. die Erweichungstemperatur und/oder die Reißfestigkeit.

Weiterhin kommen diverse Papiere, optional auch in Kombination mit einer stabilisierenden Extrusionsbeschichtung, als Trägermaterial für Releasematerialien in Frage. Alle genannten Release-Träger erhalten durch einen oder mehrere Beschichtungsgänge beispielsweise mit einem Silikon-basierenden Release, ihre antiadhäsiven Eigenschaften. Der Auftrag kann dabei ein- oder beidseitig erfolgen.

Der in der Beschichtungsdüse ausgeformte Film wird in einer Distanzbeschichtung auf das Träger- oder Releasematerial, im Nachfolgenden nur noch Trägermaterial benannt, aufgelegt. Hierbei ist die Distanz zwischen Austrittspunkt am Auftragswerk und Auflegepunkt auf dem Auflegeelement größer als die Schichtdicke im Auflegepunkt. Es bildet sich eine Schmelzefahne aus, deren Geometrie durch den Abstand vom Austrittspunkt des Auftragswerks (Detail (7) in Abbildung 1) und dem Auflegepunkt (Detail (8) in Abbildung 1) auf dem Ablegeelement, optional auf dem Trägermaterial, festgelegt ist: Die Auflegelinie wird durch eine gebräuchliche Auflegetechnik erzeugt, dies kann z. B. über ein geeignetes Luftmesser, eine Vakuumbox - ggf. in Kombination mit einem Luftmesser - oder über elektrostatische Auflegevorrichtungen erfolgen. Der so beschichtete Träger wird bevorzugt über eine angetriebene, kühl- oder temperierbare Walze geführt. Aber auch auf Anordnungen wie beispielsweise Transportbänder, antiadhäsiv beschichtete Rotationskörper oder mit einer Fluidschicht versehene Walzen kann die Schmelzefahne aufgelegt werden und dem Trägermaterial in einer nachfolgenden Übertragungseinheit ("Kaschierstation") übergeben werden.

Die erfindungsgemäßen Verfahren können optional einen Thermokanal enthalten, so dass der beschichtete Haftklebemassenfilm einer Temperatur ausgesetzt werden kann. Wärme wird beispielsweise durch elektrische Heizung und/oder Infrarot-Strahlung zugeführt. Bevorzugt wird im Sinne dieser Erfindung zwischen Auflegen der Schmelzefahne auf das Ablegemedium und einem Vernetzungsschritt nicht geheizt, um die Relaxation des erzeugten anisotropen Zustands nicht zu beschleunigen.

Es ist besonders vorteilhaft, wenn sich an den Beschichtungsschritt ggf. ein Vernetzungsschritt anschließt, der dafür sorgt, dass der anisotrope Zustand des Haftklebemassenfilms "eingefroren" wird, bevor Relaxation in ausgeprägtem Maße dazu führen kann, dass dieser Zustand abgebaut wird. Zum selben Zweck kann auch ein Vernetzungsschritt während des Beschichtungsschritts zum Einsatz kommen. Besonders gut einsetzbar sind strahlenchemische Vernetzungsverfahren, die UV-Strahlung und/oder Elektronenstrahlen nutzen. Wichtig ist dabei die Zeitdauer zwischen Ablage des freien Haftklebemassenfilms auf dem Ablegemedium und dem Zeitpunkt der Vernetzung, da in diesem Zeitraum Relaxation auftritt. Eine Vemetzungsstation ist erfinderisch im Prozess integriert, wenn der Vernetzungsprozess nach einer Zeitspanne zwischen Massenaustritt aus dem Auftragswerk und Vernetzung von höchstens 25 s, bevorzugt von höchstens 10 s auf den Haftklebemassenfilm einwirkt. Es kann jedoch auch jedwede Form von thermischen Vernetzungen, auch verschiedener solcher Vernetzungen und auch in Kombination mit strahlenchemischen Vernetzungsverfahren zum Fixieren der Anisotropie zur Anwendung kommen.

Als Haftklebemassen können alle linearen, sternförmigen, verzweigten, gepfropften oder andersartig gestalteten Polymere, bevorzugt Homopolymere, statistische Copolymere oder Blockcopolymere, zum Einsatz kommen, die eine Molmasse von mindestens 100 000 g/mol, bevorzugt von mindestens 250 000 g/mol, sehr bevorzugt von mindestens 500 000 g/mol aufweisen. Bevorzugt wird eine Polydispersität, gegeben als Quotient aus Massenmittel und Zahlenmittel der Molmassenverteilung von mindestens 2. Bevorzugt wird außerdem eine Erweichungstemperatur von kleiner als 20 °C. Als Molmasse ist in diesem Zusammenhang das Gewichtsmittel der Molmassenverteilung, wie sie beispielsweise über gelpermeationschromatographische Untersuchungen zugänglich ist, zu verstehen. Unter Erweichungstemperatur sei in diesem Zusammenhang die quasistatische Glasübergangstemperatur für amorphe Systeme und die Schmelztemperatur für semikristalline Systeme verstanden, die beispielsweise durch dynamisch differentialkalorimetrische Messungen bestimmt werden können. Sind Zahlenwerte für Erweichungstemperaturen angegeben, dann beziehen sich diese bei amorphen Systemen auf die Mittelpunktstemperatur der Glasstufe und bei semikristallinen Systemen auf die Temperatur bei maximaler Wärmetönung während des Phasenübergangs.

Als Haftklebemassen können alle dem Fachmann bekannten Haftklebemassen, insbesondere Acrylat-, Naturkautschuk-, Synthesekautschuk- oder Ethylenvinylacetatbasierende Systeme eingesetzt werden. Auch Kombinationen dieser Systeme sind erfindungsgemäß.

Als Beispiele, aber ohne eine Einschränkung vornehmen zu wollen, seien als vorteilhaft im Sinne dieser Erfindung statistische Copolymere ausgehend von unfunktionalisierten $\alpha,\beta$-ungesättigter Estern und statistische Copolymere ausgehend von unfunktionalisierten Alkylvinylethern genannt. Bevorzugt werden $\alpha,\beta$-ungesättigte Alkylester der allgemeinen Struktur

$$CH_2=C(R^1)(COOR^2) \qquad (I)$$

verwendet, wobei $R^1$ = H oder $CH_3$ und $R^2$ = H oder lineare, verzweigte oder ringförmige, gesättigte oder ungesättigte Alkylreste mit 1 bis 30, insbesondere mit 4 bis 18 Kohlenstoffatomen darstellt.

Monomere, die sehr bevorzugt im Sinne der allgemeinen Struktur (I) eingesetzt werden, umfassen Acryl- und Methacrylsäureester mit Alkylgruppen bestehend aus 4 bis 18 C-Atomen. Spezifische Beispiele für entsprechende Verbindungen sind, ohne sich durch diese Aufzählung einschränken zu wollen, n-Butylacrylat, n-Pentylacrylat, n-Hexylacrylat, n-Heptylacrylat, n-Octylacrylat, n-Nonylacrylat, Laurylacrylat, Stearylacrylat, Stearylmethacrylat, deren verzweigte Isomere, wie z. B. 2-Ethylhexylacrylat und isoOctylacrylat sowie cyclische Monomere wie z. B. Cyclohexyl- oder Norbornylacrylat und Isobornylacrylat.

Ebenfalls einsetzbar als Monomere sind Acryl- und Methacrylsäureester, die aromatische Reste enthalten, wie z. B. Phenylacrylat, Benzylacrylat, Benzoinacrylat, Phenylmethacrylat, Benzylmethacrylat oder Benzoinmethacrylat.

Weiterhin können optional Vinylmonomere aus den folgenden Gruppen eingesetzt werden: Vinylester, Vinylether, Vinylhalogenide, Vinylidenhalogenide, sowie Vinylverbindungen, die aromatische Zyklen oder Heterozyklen in α-Stellung enthalten. Für die optional einsetzbaren Vinylmonomere seien beispielhaft ausgewählte erfindungsgemäß einsetzbare Monomere genannt: Vinylacetat, Vinylformamid, Vinylpyridin, Ethylvinylether, 2-Ethylhexylvinylether, Butylvinylether, Vinylchlorid, Vinylidenchlorid, Acrylnitril, Styrol und α-Methylstyrol.

Weitere erfindungsgemäß einsetzbare Monomere sind Glycidylmethacrylat, Glycidylacrylat, Allylglycidylether, 2-Hydroxyethylmethacrylat, 2-Hydroxyethylacrylat, 3-Hydroxypropylmethacrylat, 3-Hydroxypropylacrylat, 4-Hydroxybutylmethacrylat, 4-Hydroxybutylacrylat, Acrylsäure, Methacrylsäure, Itaconsäure und deren Ester, Crotonsäure und deren Ester, Maleinsäure und deren Ester, Fumarsäure und deren Ester, Maleinsäureanhydrid, Methacrylamid sowie N-alkylierte Derivate, Acrylamid sowie N-alkylierte Derivate, N-Methylolmethacrylamid, N-Methylolacrylamid, Vinylalkohol, 2-Hydroxyethylvinylether, 3-Hydroxypropylvinylether und 4-Hydroxybutylvinylether.

Bei Kautschuk oder Synthesekautschuk als Ausgangsmaterial für die Haftklebemasse sind weitere Variationsmöglichkeiten gegeben, sei er aus der Gruppe der Naturkautschuke oder der Synthesekautschuke oder sei er aus einem beliebigen Verschnitt aus Naturkautschuken und/oder Synthesekautschuken, wobei der Naturkautschuk oder die Naturkautschuke grundsätzlich aus allen erhältlichen Qualitäten wie zum Beispiel Crepe-, RSS-, ADS-, TSR- oder CV-Typen, je nach benötigtem Reinheits- und Viskositätsniveau, und der Synthesekautschuk oder die Synthesekautschuke aus der Gruppe der statistisch copolymerisierten Styrol-Butadien-Kautschuke (SBR), der Butadien-Kautschuke (BR), der synthetischen Polyisoprene (IR), der Butyl-Kautschuke (IIR), der halogenierten Butyl-Kautschuke (XIIR), der Acrylat-Kautschuke (ACM), der Ethylenvinylacetat-Copolymere (EVA) und der Polyurethane und/oder deren Verschnitten gewählt werden können.

Weiterhin können Kautschuken zur Verbesserung der Verarbeitbarkeit vorzugsweise thermoplastische Elastomere mit einem Gewichtsanteil von 10 bis 50 Gew.% bezogen auf den Gesamtelastomeranteil zugesetzt werden. Stellvertretend seien an dieser Stelle vor allem die besonders verträglichen Typen Polystyrol-Polyisopren-Polystyrol (SIS) und Polystyrol-Polybutadien-Polystyrol (SBS) genannt.

Als optional einsetzbare klebrigmachende Harze sind ausnahmslos alle vorbekannten und in der Literatur beschriebenen Klebharze einsetzbar. Genannt seien stellvertretend die Kolophoniumharze, deren disproportionierte, hydrierte, polymerisierte, veresterte Derivate und Salze, die aliphatischen und aromatischen Kohlenwasserstoffharze, Terpenharze und Terpenphenolharze. Beliebige Kombinationen dieser und weiterer Harze können eingesetzt werden, um die Eigenschaften der resultierenden Klebmasse wunschgemäß einzustellen.

Als ebenfalls optional einsetzbare Weichmacher können alle aus der Selbstklebebandtechnologie bekannten weichmachenden Substanzen eingesetzt werden. Dazu zählen unter anderem die paraffinischen und naphthenischen Öle, (funktionalisierte) Oligomere wie Oligobutadiene und -isoprene, flüssige Nitrilkautschuke, flüssige Terpenharze, pflanzliche und tierische Fette und Öle, Phthalate und funktionalisierte Acrylate. Haftklebemassen, wie sie oben angegeben sind, können zudem weitere Bestandteile wie rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

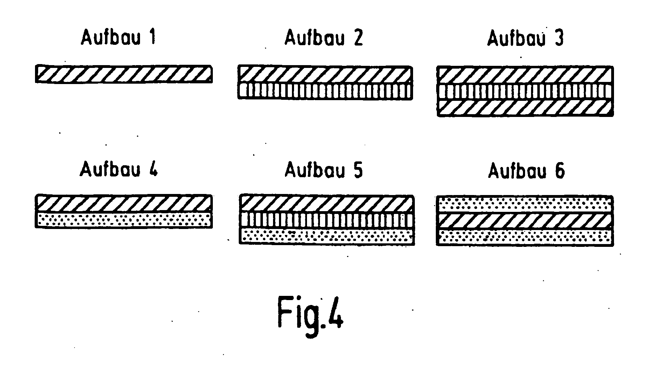

Die durch die efindungsgemäßen Verfahren hergestellten anisotropen Haftklebemassen lassen sich zum Aufbau verschiedenartiger haftklebriger Produkte nutzen. Erfindungsgemäße Aufbauten haftklebriger Produkte sind in Abbildung 4 dargestellt. Jede Schicht in den erfindungsgemäßen Aufbauten haftklebriger Produkte kann wahlweise geschäumt sein.

Im einfachsten Fall besteht ein erfindungsgemäßes haftklebriges Produkt aus der Haftklebemasse in einschichtigem Aufbau (Aufbau 1). Aufbau 1 kann optional einseitig oder beidseitig mit einem Trennliner, z. B. einer Trennfolie oder einem Trennpapier eingedeckt werden. Die Schichtdicke der Haftklebemasse beträgt typischerweise zwischen 1 μm und 2000 μm, bevorzugt zwischen 5 μm und 1000 μm.

Die Haftklebemasse kann sich ferner auf einem Träger, insbesondere einem Folien- oder Papierträger befinden (Aufbau 2). Der Träger kann dabei auf der zur Haftklebemasse zeigenden Seite dem Stand der Technik entsprechend vorbehandelt sein, so dass beispielsweise eine Verbesserung der Haftklebemasseverankerung erzielt wird. Ebenso kann die Seite mit einer funktionalen Schicht ausgerüstet sein, die beispielsweise als Sperrschicht fungieren kann. Die Trägerrückseite kann dem Stand der Technik entsprechend vorbehandelt sein, so dass beispielsweise eine Trennwirkung erreicht wird. Die Trägerrückseite kann ferner bedruckt sein. Die Haftklebemasse kann optional mit einem Trennpapier oder einer Trennfolie eingedeckt werden. Die Haftklebemasse weist eine typische Schichtdicke zwischen 1 μm und 2000 μm, bevorzugt zwischen 5 μm und 1000 μm auf.

Bei Aufbau 3 handelt es sich um ein doppelseitiges haftklebriges Produkt, das als Mittelschicht z. B. eine Trägerfolie, ein Trägerpapier, ein textiles Flächengebilde oder einen Trägerschaum enthält. In Aufbau 3 kommen als obere und untere Schicht erfindungsgemäße Haftklebemassen gleicher oder verschiedener Art und/oder gleicher oder verschiedener Schichtdicke zur Anwendung. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Typischerweise weisen die Haftklebemasseschichten unabhängig voneinander Schichtdicken zwischen 1 $\mu$m und 2000 $\mu$m, bevorzugt zwischen 5 $\mu$m und 1000 $\mu$m auf.

Als weiteres doppelseitiges haftklebriges Produkt ist Aufbau 4 eine erfindungsgemäße Variante. Eine erfindungsgemäße Haftklebemasseschicht trägt auf einer Seite eine weitere Haftklebemassenschicht, die aber beliebiger Natur sein kann und daher nicht erfindungsgemäß sein braucht. Der Aufbau dieses haftklebrigen Produkts kann optional mit einem oder zwei Trennfolien oder Trennpapieren eingedeckt sein. Die Haftktebemasseschichten weisen unabhängig voneinander Schichtdicken zwischen typischerweise 1 $\mu$m und 2000 $\mu$m, bevorzugt zwischen 5 $\mu$m und 1000 $\mu$m auf.

Wie in Aufbau 4 handelt es sich auch bei Aufbau 5 um ein doppelseitiges haftklebriges Produkt, das eine erfindungsgemäße Haftklebemasse enthält sowie eine beliebige weitere. Die beiden Haftklebemasseschichten sind in Aufbau 5 jedoch durch einen Träger, eine Trägerfolie, ein Trägerpapier, ein textiles Flächengebilde oder einen Trägerschaum voneinander getrennt. Der Träger kann dabei auf einer oder beiden Seiten dem Stand der Technik entsprechend vorbehandelt sein, so dass beispielsweise eine Verbesserung der Haftklebemassenverankerung erzielt wird. Ebenso können eine oder beide Seiten mit einer funktionalen Schicht ausgerüstet sein, die beispielsweise als Sperrschicht fungieren kann. Die Haftklebemasseschichten können optional mit Trennpapieren oder Trennfolien eingedeckt werden. Die Haftklebemasseschichten weisen unabhängig voneinander Schichtdicken zwischen typischerweise 1 $\mu$m und 2000 $\mu$m, bevorzugt zwischen 5 $\mu$m und 1000 $\mu$m auf.

Das erfindungsgemäße haftklebrige Produkt nach Aufbau 6 enthält eine Schicht erfindungsgemäßen Materials als Mittelschicht, die auf beiden Seiten mit beliebigen Haftklebemassen gleicher oder verschiedener Art ausgestattet ist. Eine oder beide Seiten der Mittelschicht können mit einer funktionalen Schicht ausgerüstet sein, die beispielsweise als Sperrschicht fungieren kann. Bei den äußeren Haftklebemasseschichten brauchen keine erfindungsgemäßen Haftklebemassen zum Einsatz kommen. Die äußeren Haftklebemasseschichten können optional mit Trennpapieren oder Trennfolien eingedeckt werden. Die äußeren Haftklebemasseschichten weisen unabhängig voneinander Schichtdicken zwischen typischerweise 1 $\mu$m und 2000 $\mu$m, bevorzugt zwischen 5 $\mu$m und 1000 $\mu$m auf. Die Dicke der Mittelschicht beträgt typischerweise zwischen 1 $\mu$m und 2000 $\mu$m, bevorzugt zwischen 5 $\mu$m und 1000 $\mu$m.

Die erfindungsgemäßen haftklebrigen Produkte werden vorteilhaft so eingesetzt, dass die in ihnen existierende strukturelle Anisotropie für optische, elektrische, elektronische, optoelektronische, magnetische, thermische, mechanische und/oder klebtechnische Effekte ausgenutzt wird. Sie kommen bevorzugt in Form gestanzter Objekte oder von Selbstklebebändern zur Anwendung.

Im vorstehenden Teil dieser Beschreibung wurde gezeigt, dass die Länge der Schmelzefahne als Steuergröße zur Einstellung von erhöhter Anisotropie in Haftklebemassen während der Beschichtung vorteilhaft und erfindungsgemäß genutzt werden kann. Im Verarbeitungsprozess kann es vorteilhaft sein, auch andere Prozessparameter zu variieren. Als ein Beispiel hierfür sei die Prozessgeschwindigkeit genannt. Solche Prozessparameter haben ggf. einen Einfluss auf den im Prozess erzeugten Grad an Anisotropie in Haftklebemassen. Für konstante Produkteigenschaften ist es aber notwendig, immer ein einheitliches Maß an Anisotropie in der Haftklebemasse zu generieren. Es ist Teil dieser Erfindung, die Länge der Schmelzefahne als Kompensationsgröße einzusetzen, so dass die Haftklebemasse den ursprünglichen Grad an Anisotropie aufweist, obwohl andere Prozessparameter geändert wurden. Auf der anderen Seite kann die Länge der Schmelzefahne verwendet werden, um bei ansonsten konstanten weiteren Prozessbedingungen verschiedene Anisotropiegrade zu erzeugen, wie beispielsweise bei konstantem Massenaustrittsspalt.

Insbesondere werden erfindungsgemäß haftklebrige Produkte bereitgestellt, wobei die anisotropen optischen, elektrischen, elektronischen, optoelektronischen, thermischen, mechanischen und/oder klebtechnischen Eigenschaften der zumindest einen Schicht basierend auf anisotropen Haftklebemassen ausgenutzt werden.

Die Erfindung soll anhand von Beispielen näher erläutert werden, ohne sie jedoch darauf zu beschränken.

Ausführungsbeispiele

Beispiele für die erfindungsgemäßen Verfahren zur Erzeugung von hohen Graden an Anisotropie in Haftklebemassen wurden durch Computer-Simulationen und zwar durch Auswertung der Ergebnisse Finiter-Elemente (FE) Berechnungen erhalten. Simulationen stellen Experimente am Computer dar und sind daher mit experimentellen Ergebnissen vergleichbar. Die simulationstechnische Vorgehensweise wird im Folgenden beschrieben [siehe auch T. Dollase et al., Beitrag zur PSTC TECH XXVII Global Conference, Orlando, 2004].

Als Grundlage der Simulationen diente der von Feigl, Laso und Öttinger entwickelte rechnerische Ansatz, der unter dem Namen CONNFFESSIT (Calculation of NonNewtonian Flow: Finite Elements and Stochastic Simulation Technique) publiziert wurde [K. Feigl, M. Laso, H. C. Öttinger, Macromolecules, 1995, 28, 3261]. Zur Durchführung der Rechnungen werden sieben Stufen durchlaufen. Hierzu zählt zunächst die Definition des Designs des zu untersuchenden Herstellprozesses, der Prozessparameter und der Art der zu prozessierenden Materialien. Anschließend wird für die zu untersuchenden Materialien als Input für die Simulationen das rheologische Profil experimentell aufgenommen. Danach werden die rheologischen Daten an ein speziell ausgewähltes konstitutives Gleichungssystem angepasst. Außerdem werden für die zuvor definierten Prozessgeometrien FE-Netze aufgestellt. In Kombination mit Prozessparametem wie Temperatur und Durchsatz werden in diesen FE-Netzen durch numerische Kalkulationen Temperatur-, Geschwindigkeits- und Geschwindigkeitsgradientenfelder erstellt. Schließlich kann ein Verarbeitungsprozess simuliert werden, indem ein Volumenelement der Haftklebemasse durch das Geschwindigkeitsfeld fließt und dabei je nach Ort im Prozess unterschiedliche Temperaturen und Geschwindigkeitsgradienten erfährt. Diese äußeren Einflüsse führen dazu, dass sich das Material entsprechend seines rheologischen Verhaltens umstrukturiert. Im letzten Schritt der Simulation erhält man Daten zur Anisotropie in Form der molekularen Orientierung und der Kettenstreckung.

Im Folgenden werden zwei Beispiele und ein Vergleichsbeispiel vorgestellt, die die Vorteile bevorzugter Auslegungen dieser Erfindungen verdeutlichen und untermauern sollen. Für alle drei Beispiele wurden Simulationen nach dem oben beschriebenen Ablauf durchgeführt. Daten zur Rheologie des Haftklebemassensystems umfassten dynamischmechanische Analysen zur Untersuchung des linear viskoelastischen Verhaltens unter Scherung, Messungen zum stationären Fließverhalten unter Scherung, zum zeitabhängigen Fließverhalten zu Beginn einer neu einsetzenden Scherbeanspruchung sowie des zeitabhängigen Fließverhaltens unter Dehnung. Weitere Daten, denen experimentelle Bestimmungen zu Grunde lagen und als Materialgrößen den Simulationen eingegeben wurden, waren die Temperaturabhängigkeit der Dichte, der Wärmeleitfähigkeit und der spezifischen Wärmekapazität. Diese Daten wurden an ein konstitutives Gleichungssystem angepasst, das zur Beschreibung des nicht-linearen Fließverhaltens verschlaufter Polymerschmelzen besonders geeignet ist [H. C. Öttinger, J. Rheol., 1999, 43, 1461; J. Fang, M. Kröger, H. C. Öttinger, J. Rheol., 2000, 44, 1293]. Es resultierten die vier Materialgrößen $G_N^0$, Z, $T_D$ und $\lambda_{max}$ sowie ihre Temperaturabhängigkeit.

Nachdem für die gewünschten Prozessgeometrien FE-Netze erstellt und die Temperatur-, Geschwindigkeits- und Geschwindigkeitsgradientenfelder berechnet worden waren, wurden die eigentlichen FE-Simulationen gestartet. Hierzu wurde ein System, das 30 000 Polymerketten enthielt, betrachtet und im simulativen Fließprozess verfolgt, wie sich die Struktur dieses statistischen Ensembles während des Prozesses änderte, d. h. wie Anisotropie entstand bzw. relaxierte. Das statistische Ensemble wurde im Zentrum des Massestroms am Ende der Massezuführung und im Eingangsbereich des Beschichtungsaggregats platziert. Während der FE-Simulationen bewegte sich das Ensemble entlang von Strömungslinien, die aus den zuvor berechneten Geschwindigkeitsfeldern resultierten. Die Anisotropie in Form von Kettenstreckung und molekularer Orientierung wurde inkrementell an Punkten entlang der Strömungslinien registriert. Entscheidend waren die Werte, die für die verschiedenen untersuchten Prozesse und für die untersuchte Haftklebemasse im Auflagepunkt auf dem Ablegemedium (Punkt 8 in Abbildung 1) gefunden wurden. Hohe Werte für molekulare Orientierung und Kettenstreckung deuten an, dass über die durchgeführte Prozessauslegung hohe Grade an Anisotropie erzeugt werden, niedrige Werte dagegen implizieren, dass die angewendete Prozessauslegung nur eingeschränkt oder gar nicht zu anisotroper Struktur der Haftklebemasse führt.

Um Anisotropie quantifizieren zu können und damit Ergebnisse verschiedener Prozessfahrweisen miteinander vergleichen zu können, werden numerische Daten benötigt, die Kettenstreckung und molekulare Orientierung zahlenmäßig beschreiben. Jedes dieser beiden Phänomene dient als vom jeweils anderen prinzipiell unabhängige Beschreibungsgröße für Anisotropie. Beide Phänomene verfolgen dabei denselben Trend, nämlich dass ein hoher Betrag einen hohen Grad an Anisotropie bedeutet.

Die Beschreibung der Kettenstreckung erfolgt im Einkettenmodell. Für Kettenstreckung im Gleichgewichtszustand ist der Wert $\lambda = 1$ definiert. In diesem Zustand ist die Einhüllende einer betrachteten Polymerkette (einem Ellipsoid wie in Abbildung 2 dargestellt) durch die Halbachsenwerte a, b und c charakterisiert, die im Allgemeinen verschiedene Werte aufweisen. Kettenstreckung führt zu einer Deformation des Ellipsoids, so dass die Halbachsenwerte die Beträge a', b' und c' annehmen. Die Kette kann maximal soweit gestreckt werden, wie es durch die Materialgröße $\lambda_{max}$ vorgegeben ist. Der Größe $\lambda$, die den Zustand der Kettenstreckung beschreibt, kann damit beliebige Werte von 1 bis $\lambda_{max}$ annehmen.

Molekulare Orientierung wird über die Verwendung von Eigenwerten des Orientierungstensors quantifiziert. Der Ansatz beinhaltet ein Mehrkettenmodell. In ihm wird für ein Ensemble die Ausrichtung aller Ellipsoide gemittelt und auf eine etwaige mittlere Vorzugsrichtung hin untersucht. Der Orientierungstensor wird, wenn Deformation in Maschinenrichtung auftritt, durch drei Eigenvektoren aufgespannt, die im Wesentlichen parallel zur Maschinenrichtung, parallel zur transversalen Richtung bzw. parallel zur normalen Richtung liegen. Das Verhältnis $\Omega$ aus demjenigen Eigenwert, der den Betrag des Eigenvektors entlang der Maschinenrichtung beschreibt, und demjenigen Eigenwert, der den Betrag des Eigenvektors entlang der transversalen Richtung ausdrückt, ist ein quantitatives Maß für molekulare Orientierung. Der Wert $\Omega$ nimmt Werte von 1 im isotropen Zustand bis $\infty$ (unendlich) im vollständig orientierten Zustand an.

*Vergleichsbeispiel:* Ein harzfreies Polyacrylat nach DE 39 42 232 wurde bei 170 °C mittels einer Extrusionsdüse mit Kleiderbügelverteiler mit einer Arbeitsbreite von 350 mm auf ein silikonisiertes Trennpapier beschichtet. Der Düsenspalt maß 300 $\mu$m und die Länge der Düsenlippe 60 mm. Die Bahngeschwindigkeit betrug 50 m/min, der Massenauftrag 75 g/m$^2$ und der Durchsatz 73 kg/h. Die Länge der Schmelzefahne lag bei 40 mm.

*Beispiel 1:* Ein Polyacrylat, wie es auch im Vergleichsbeispiel zum Einsatz kam, wurde bei 170 °C mittels einer Estrusionsdüse mit Kleiderbügelverteiler mit einer Arbeitsbreite von 350 mm auf ein silikonisiertes Trennpapier beschichtet. Der Düsenspalt maß erneut 300 $\mu$m und die Länge der Düsenlippe 60 mm. Die Bahngeschwindigkeit betrug 50 m/min, der Massenauftrag 75 g/m$^2$ und der Durchsatz 73 kg/h. Die Länge der Schmelzefahne lag bei 20 mm.

*Beispiel 2*: Ein Polyacrylat, wie es auch im Vergleichsbeispiel und in Beispiel 1 zum Einsatz kam, wurde bei 170 °C mittels einer Extrusionsdüse mit Kleiderbügelverteiler mit einer Arbeitsbreite von 350 mm auf ein silikonisiertes Trennpapier beschichtet. Der Düsenspalt maß wiederum 300 $\mu$m und die Länge der Düsenlippe 60 mm. Die Bahngeschwindigkeit betrug 50 m/min, der Massenauftrag 75 g/m$^2$ und der Durchsatz 73 kg/h. Die Länge der Schmelzefahne lag bei 80 mm.

Für die beiden Beispiele und das Vergleichsbeispiel wurden das Verhältnis $\Gamma$ berechnet und die in der Simulation erhaltenen Daten zur Kettenstreckung $\lambda$ und Orientierung $\Omega$ im Punkt 8 (siehe Abbildung 1) aufgezeichnet. Die Werte sind in Tabelle 2 zusammengefasst.

- Tabelle 2 -

|  | Verhältnis $\Gamma$ | Kettenstreckung $\lambda$ | Orientierung $\Omega$ |
|---|---|---|---|
| Vergleichsbeispiel | 0,005 s$^2$ | 1,60 | 6,1 |
| Beispiel 1 | 0,002 s$^2$ | 1,63 | 6,4 |
| Beispiel 2 | 0,020 s$^2$ | 1,62 | 6,5 |

Die Beispiele zeigen, dass ein durch den Prozess erfindungsgemäß modifiziertes Verhältnis $\Gamma$ im Vergleich zur Referenzfahrweise durch die erfindungsgemäße Auswahl von Verfahrensparametern auf zwei Weisen zu einer gesteigerten Anisotropie in der untersuchten Haftklebemasse führt. In Beispiel 1 wurde zur Unterstreichung einer vorteilhaften Auslegung dieser Erfindung die Länge der Schmelzefahne gegenüber der Referenz auf 20 mm erfindungsgemäß reduziert. Damit ergab sich eine höhere Reckrate und in Folge dessen ein erfindungsgemäß niedriges Verhältnis $\Gamma$ von 0,002 s$^2$. Sowohl Kettenstreckung wie auch molekulare Orientierung lassen sich durch diese Auslegung des Beschichtungsprozesses verbessern. Die zweite vorteilhafte Auslegung dieser Erfindung wird in Beispiel 2 deutlich. Im Gegensatz zum Vergleich wurde die Länge der Schmelzefahne nun auf 80 mm erfindungsgemäß erhöht. Damit verlängerte sich die Wirkzeit und das Verhältnis $\Gamma$ stieg auf einen erfindungsgemäß hohen Wert von 0,020 s$^2$. Wie auch in Beispiel 1 resultieren auch hier, obwohl auf andere aber auch erfinderische Weise realisiert, erhöhte Beträge in Kettenstreckung und molekularer Orientierung.

**Bezugszeichenliste**

1    Klebmassezuführung
2    Auftragswerk oder Beschichtungsaggregat
3    Schmelzefahne
4    Kühlwalze
5    optional einsetzbares separat zugeführtes Ablegemedium
6    optional einsetzbare Vernetzungsstation
7    Austrittsspalt
8    Auflegepunkt

**Patentansprüche**

1.    Verfahren zur Herstellung von Haftklebemassen hoher Anisotropie, welches als Prozesselemente eine Klebmasseversorgung, ein Auftragswerk und ein Ablegeelement umfasst, wobei zwischen Austritt des Auftragswerks und Auflagepunkt auf dem Ablegeelement eine freie Schmelzefahne der Haftklebemasse gebildet wird, die einen Reckprozess erfährt,
      **dadurch gekennzeichnet, dass**
      das Recken der Haftklebemasse in der freien Schmelzefahne über ein Wirkverhältnis $\Gamma$ gesteuert wird, welches als Verhältnis von Wirkzeit $\Delta t$ des Reckprozesses zur Reckrate R **gekennzeichnet** ist, und welches auf einen Wert von mindestens 0,006 s$^2$ oder auf einen Wert von maximal 0,004 s$^2$ eingestellt wird, wobei die Wirkzeit $\Delta t$ durch die Formel 2Lr/[$v_{Banh}$(1+r)] definiert wird, in welcher L die Länge der Schmelzefahne, r das Reckverhältnis und $v_{Bahn}$ die Geschwindigkeit der Schmelzefahne bedeuten, und die Reckrate R als zeitliche Ableitung des Reckverhältnisses r definiert ist.

2.    Verfahren nach Anspruch 1, **dadurch gekennzeichnet, dass** das Wirkverhältnis $\Gamma$ auf einen Wert von mindestens

0,006 s$^2$, vorzugsweise auf einen Wert von mindestens 0,008 s$^2$ eingestellt wird.

3. Verfahren nach einem der Ansprüche 1 oder 2, **dadurch gekennzeichnet, dass** für die Haftklebemasse in der Schmelzefahne das Verhältnis $\Gamma$ so realisiert wird, dass die Länge der Schmelzefahne hoch ist und mindestens 40 mm, bevorzugt mindestens 75 mm, sehr bevorzugt mindestens 100 mm beträgt.

4. Verfahren nach Anspruch 1, **dadurch gekennzeichnet, dass** das Wirkverhältnis $\Gamma$ auf einen Wert von höchstens 0,004 s$^2$, vorzugsweise auf einen Wert von höchstens 0,002 s$^2$, eingestellt wird.

5. Verfahren nach einem der Ansprüche 1 oder 4, **dadurch gekennzeichnet, dass** für die Haftklebemasse in der Schmelzefahne das Verhältnis $\Gamma$ so realisiert wird, dass die Länge der Schmelzefahne niedrig ist und höchstens 40 mm, bevorzugt höchstens 25 mm, sehr bevorzugt höchstens 15 mm beträgt.

6. Verfahren nach einem der Ansprüche 1 bis 5, **dadurch gekennzeichnet, dass** die Wirkzeit $\Delta t$, einen Wert von mindestens 0.01 s, vorzugsweise mindestens 0,1 s, besonders bevorzugt von mindestens 0,25 s aufweist.

7. Verfahren nach einem der Ansprüche 1 bis 6, **dadurch gekennzeichnet, dass** die Haftklebemasse in der Schmelzefahne einer Reckrate R von mindestens 1 s$^{-1}$, vorzugsweise mindestens 10 s$^{-1}$, bevorzugt von mindestens 25 s$^{-1}$ ausgesetzt wird.

8. Verfahren nach einem der Ansprüche 1 bis 7, **dadurch gekennzeichnet, dass** das Reckverhältnis r der Haftklebemasse in der Schmelzefahne, welches durch D/d = $v_{Bahn}/v_0$ definiert ist, wobei D die Austrittsspalthöhe des Austrittsspalts des Auftragswerks bedeutet und d die Schichtdicke des auf dem Ablegeelement abgelegten Haftklebemassefilms ist sowie $v_0$ die Geschwindigkeit am Austrittspalt ist, mindestens 2:1, bevorzugt mindestens 4:1, besonders bevorzugt mindestens 6:1 beträgt.

9. Verfahren nach einem der Ansprüche 1 bis 8, **dadurch gekennzeichnet, dass** die Höhe des Austrittsspalts D mindestens 150 $\mu$m, besonders bevorzugt mindestens 300 $\mu$m, sehr bevorzugt mindestens 600 $\mu$m beträgt.

10. Verfahren nach einem der Ansprüche 1 bis 9, **dadurch gekennzeichnet, dass** die Schichtdicke d von Haftklebemassen vorzugsweise zwischen 1 $\mu$m und 2000 $\mu$m, besonders bevorzugt zwischen 5 $\mu$m und 1000 $\mu$m liegt.

11. Verfahren nach einem der Ansprüche 1 bis 10, **dadurch gekennzeichnet, dass** die Beschichtungstemperatur zwischen mindestens 25 °C und höchstens 250 °C, bevorzugt zwischen mindestens 50 °C und höchstens 200 °C liegt.

12. Verfahren nach einem der Ansprüche 1 bis 11, **dadurch gekennzeichnet, dass** der Haftklebemassenfilm, nachdem er das Auftragswerk verlassen hat, gekühlt wird, vorzugsweise durch Passieren eines Kühlmediums beliebiger Art und/oder eines Kühlaggregats beliebiger Art.

13. Verfahren nach Anspruch 12, **dadurch gekennzeichnet, dass** zur Kühlung eine Kühlwalze eingesetzt wird, die bei einer Temperatur von höchstens 60 °C, bevorzugt von höchstens 30 °C betrieben wird.

14. Verfahren nach einem der Ansprüche 1 bis 13, **dadurch gekennzeichnet, dass** als Masseversorgung solche Systeme eingesetzt werden, die entweder einzeln oder in Kombination bevorzugt lösungsmittelfreie Schmelzhaftkleber bei Bedarf ausreichend stark erweichen, oder zumindest temperieren und fördern, vorzugsweise Fassschmelzsysteme, Premelter und/oder Extruder, ggf. gekoppelt mit Schmelzepumpen.

15. Verfahren nach einem der Ansprüche 1 bis 14, **dadurch gekennzeichnet, dass** als Auftragswerk eine Beschichtungseinheit eingesetzt wird, die als kontaktloses Verfahren eine Schmelzefahne ausbildet, vorzugsweise Schlitzdüsen wie z. B. Extrusionsdüsen oder Vorhang-Beschichtungsdüsen wie beispielsweise Gießdüsen.

16. Verfahren nach einem der Ansprüche 1 bis 15, **dadurch gekennzeichnet, dass** als Ablegemedium bevorzugt Rollen- oder Walzenkörper eingesetzt werden, die geeignet sind, eine Warenbahn zu führen, wobei der Auflegepunkt entweder auf jedem Oberflächenpunkt eines einzelnen zylindrischen Körpers oder im Spalt zwischen zwei Walzenkörpern liegen kann und wobei der freie Haftklebemassenfilm dabei entweder direkt auf ein Trägermaterial aufgelegt wird oder zunächst auf eine geeignete antiadhäsive Oberfläche und erst im späteren Prozessverlauf auf ein Trägermaterial transferiert wird.

**17.** Verfahren nach einem der Ansprüche 1 bis 16, **dadurch gekennzeichnet, dass** nach dem Auflegen des Haftklebemassenfilms auf dem Ablegemedium dieser vorzugsweise in einem Trockenkanal getrocknet wird.

**18.** Verfahren nach einem der Ansprüche 1 bis 17, **dadurch gekennzeichnet, dass** sich an den Beschichtungsschritt eine Vernetzung der anisotropen Haftklebemasse anschließt, wobei der Vernetzungsvorgang bevorzugt höchstens 25 s nach dem Auflegen des Haftklebemassenfilms auf dem Ablegemedium, sehr bevorzugt höchstens 10 s nach dem Auflegen des Haftklebemassenfilms auf dem Auflegepunkt erfolgt, vorzugsweise mittels UV-Strahlung, Elektronenstrahlung und/oder thermischer Energie.

**19.** Verfahren nach einem der Ansprüche 1 bis 17, **dadurch gekennzeichnet, dass** während des Beschichtungsschritts eine Vernetzung der anisotropen Haftklebemasse durchgeführt wird, vorzugsweise mittels UV-Strahlung, Elektronenstrahlung und/oder thermischer Energie.

**20.** Verfahren nach einem der Ansprüche 1 bis 19, **dadurch gekennzeichnet, dass** die Haftklebemassen unter den Prozessbedingungen beim Austritt aus dem Auftragswerk nicht-newtonsche Fluide mit strukturviskosem Charakter darstellen.

**21.** Verfahren nach einem der Ansprüche 1 bis 20, **dadurch gekennzeichnet, dass** die Haftklebemasse

- linearer, verzweigter, gepfropfter oder anderer Gestalt ist,
- bevorzugt ein Homopolymer, statistisches Copolymer oder Blockcopolymer ist,
- eine Molmasse von mindestens 100 000 g/mol, bevorzugt von mindestens 250 000 g/mol, sehr bevorzugt von mindestens 500 000 g/mol aufweist und/oder
- eine Erweichungstemperatur bevorzugt von höchstens 20 °C aufweist.

**22.** Verfahren nach einem der Ansprüche 1 bis 21, **dadurch gekennzeichnet, dass** die Haftklebemasse auf Acrylatcopolymeren, Naturkautschuken, Synthesekautschuken oder Ethylenvinylacetat-Copolymeren oder Gemischen daraus basiert.

**23.** Verfahren nach einem der Ansprüche 1 bis 22, **dadurch gekennzeichnet, dass** die Haftklebemasse weitere Bestandteile wie Harze, Weichmacher, rheologisch wirksame Additive, Katalysatoren, Initiatoren, Stabilisatoren, Kompatibilisatoren, Kopplungsreagenzien, Vernetzer, Antioxidantien, weitere Alterungsschutzmittel, Lichtschutzmittel, Flammschutzmittel, Pigmente, Farbstoffe, Füllstoffe und/oder Blähmittel sowie optional Lösungsmittel enthalten.

**24.** Verfahren zur Einstellung einer definierter Anisotropie in Haftklebemassen während deren Herstellung, welches als Prozesselemente eine Masseversorgung, ein Auftragswerk und ein Ablegeelement umfasst, wobei zwischen Austritt des Auftragswerks und Auflagepunkt auf dem Ablegeelement eine freie Schmelzefahne der Haftklebemasse gebildet wird, die einen Reckprozess erfährt,
*dadurch gekennzeichnet, dass*
das Recken der Haftklebemasse in der freien Schmelzefahne über ein Wirkverhältnis $\Gamma$ gesteuert wird, welches als Verhältnis von Wirkzeit $\Delta t$ des Reckprozesses zur Reckrate R **gekennzeichnet** ist, wobei die Wirkzeit $\Delta t$ durch die Formel $2Lr/[v_{Bahn}(1+r)]$ definiert wird, in welcher L die Länge der Schmelzefahne, r das Reckverhältnis und $v_{Bahn}$ die Geschwindigkeit der Schmelzefahne bedeuten, und die Reckrate R als zeitliche Ableitung des Reckverhältnisses r definiert ist.

**25.** Verfahren nach Anspruch 24, **dadurch gekennzeichnet, dass** zur Sicherstellung hoher Anisotropien die Länge der freien Schmelzefahne als Stellgröße verwendet wird.

**26.** Verfahren nach Anspruch 24 oder 25, **dadurch gekennzeichnet, dass** zur Sicherstellung hoher Anisotropien ein hohes Reckverhältnis der freien Schmelzefahne als Stellgröße verwendet wird.

**Claims**

**1.** Method for producing high-anisotropy pressure-sensitive adhesives (PSAs), comprising as operating elements an adhesive supply system, an applicator mechanism, and a deposition element, there being formed, between the exit of the applicator mechanism and point of placement on the deposition element, a free melt web of the PSA, which undergoes a draw operation,

**characterized in that**
the drawing of the PSA in the free melt web is controlled via an activity ratio $\Gamma$ which is **characterized** as the ratio of activity time $\Delta t$ in the draw operation to the draw rate R, and which is set to a level of at least 0.006 s$^2$ or to a level of at most 0.004 s$^2$, the activity time $\Delta t$ being defined by the formula $2Lr/[v_{web}(1+r)]$, in which L is the length of the melt web, r is the draw ratio, and $v_{web}$ is the velocity of the melt web, and the draw rate R is defined as the time derivation of the draw ratio r.

2. Method according to Claim 1, **characterized in that** the activity ratio $\Gamma$ is set to a level of at least 0.006 s$^2$, preferably to a level of at least 0.008 s$^2$.

3. Method according to either of Claims 1 and 2, **characterized in that** for the PSA in the melt web the ratio $\Gamma$ is realized such that the length of the melt web is high and is at least 40 mm, preferably at least 75 mm, very preferably at least 100 mm.

4. Method according to Claim 1, **characterized in that** the activity ratio $\Gamma$ is set to a level of not more than 0.004 s$^2$, preferably to a level of not more than 0.002 s$^2$.

5. Method according to either of Claims 1 and 4, **characterized in that** for the PSA in the melt web the ratio $\Gamma$ is realized such that the length of the melt web is low and is not more than 40 mm, preferably not more than 25 mm, very preferably not more than 15 mm.

6. Method according to any one of Claims 1 to 5, **characterized in that** the activity time $\Delta t$ has a value of at least 0.01 s, preferably at least 0.1 s, more preferably of at least 0.25 s.

7. Method according to any one of Claims 1 to 6, **characterized in that** the PSA in the melt web is subjected to a draw rate R of at least 1 s$^{-1}$, preferably at least 10 s$^{-1}$, more preferably of at least 25 s$^{-1}$.

8. Method according to any one of Claims 1 to 7, **characterized in that** the draw ratio r of the PSA in the melt web, which is defined by $D/d = v_{web}/v_0$, where D is the height of the exit slot of the applicator mechanism and d is the layer thickness of the PSA film deposited on the deposition element, and $v_0$ is the velocity at the exit slot, is at least 2:1, preferably at least 4:1, more preferably at least 6:1.

9. Method according to any one of Claims 1 to 8,
**characterized in that** the height of the exit slot, D, is at least 150 $\mu$m, more preferably at least 300 $\mu$m, very preferably at least 600 $\mu$m.

10. Method according to any one of Claims 1 to 9, **characterized in that** the layer thickness d of PSAs is preferably between 1 $\mu$m and 2000 $\mu$m, more preferably between 5 $\mu$m and 1000 $\mu$m.

11. Method according to any one of Claims 1 to 10, **characterized in that** the coating temperature is between at least 25°C and not more than 250°C, preferably between at least 50°C and not more than 200°C.

12. Method according to any one of Claims 1 to 11, **characterized in that** the PSA film, after it has left the applicator mechanism, is cooled, preferably by passage of a cooling medium of any desired kind and/or of a cooling assembly of any desired kind.

13. Method according to Claim 12, **characterized in that** cooling is performed using a cooling roll which is operated at a temperature of not more than 60°C, preferably of not more than 30°C.

14. Method according to any one of Claims 1 to 13, **characterized in that** adhesive supply systems used are those which, either individually or in combination, effect, on demand, sufficient softening or at least heating and conveying of preferably solvent-free hot-melt PSAs, preferably drum melting systems, premelters and/or extruders, coupled, where appropriate, with melt pumps.

15. Method according to any one of Claims 1 to 14, **characterized in that** as applicator mechanism a coating unit is used which, as a contactless process, forms a melt web; preferably slot dies such as, for example, extrusion dies or curtain-coating dies such as casting dies, for example.

**16.** Method according to any one of Claims 1 to 15, **characterized in that** deposition media used are preferably roller or roll elements which are suitable for guiding a product web, it being possible for the point of placement to be situated either at each surface point of an individual cylindrical element or in the nip between two roll elements, and the free PSA film either being placed directly onto a carrier material or being first transferred to a suitable antiadhesive surface and only in the subsequent course of operation being transferred to a carrier material.

**17.** Method according to any one of Claims 1 to 16, **characterized in that**, after the PSA film has been placed on the deposition medium, it is dried preferably in a drying tunnel.

**18.** Method according to any one of Claims 1 to 17, **characterized in that** the coating step is followed by crosslinking of the anisotropic PSA, the crosslinking operation taking place preferably not more than 25 s after the placement of the PSA film on the deposition medium, very preferably not more than 10 s after the placement of the PSA film on the point of placement, preferably by means of UV radiation, electron beams and/or thermal energy.

**19.** Method according to any one of Claims 1 to 17, **characterized in that**, during the coating step, the anisotropic PSA is crosslinked, preferably by means of UV radiation, electron beams and/or thermal energy.

**20.** Method according to any one of Claims 1 to 19,
**characterized in that** under the operating conditions, on exit from the applicator mechanism, the PSAs constitute nonnewtonian fluids having a structurally viscous character.

**21.** Method according to any one of Claims 1 to 20, **characterized in that** the PSA

- is of linear, branched, grafted or other design,
- is preferably a homopolymer, random copolymer or block copolymer,
- has a molar mass of at least 100 000 g/mol, preferably of at least 250 000 g/mol, very preferably of at least 500 000 g/mol, and/or
- has a softening temperature preferably of not more than 20°C.

**22.** Method according to any one of Claims 1 to 21, **characterized in that** the PSA is based on acrylate copolymers, natural rubbers, synthetic rubbers or ethylene-vinyl acetate copolymers or mixtures thereof.

**23.** Method according to any one of Claims 1 to 22, **characterized in that** the PSAs comprise further constituents such as resins, plasticizers, additives with rheological activity, catalysts, initiators, stabilizers, compatibilizers, coupling reagents, crosslinkers, antioxidants, other aging inhibitors, light stabilizers, flame retardants, pigments, dyes, fillers and/or expandants and also, optionally, solvents.

**24.** Method of adjusting a defined anisotropy in preeaure-sensitive adhesives (PSAs) in the course of their production, comprising as operating elements a mass supply system, an applicator mechanism, and a deposition element, there being formed, between the exit of the applicator mechanism and point of placement on the deposition element, a free melt web of the PSA, which undergoes a draw operation,
**characterized in that**
the drawing of the PSA in the free melt web is controlled via an activity ratio $\Gamma$ which is **characterized** as the ratio of activity time $\Delta t$ in the draw operation to the draw rate R, the activity time $\Delta t$ being defined by the formula $2Lr/[v_{web}(1+r)]$, in which L is the length of the melt web, r is the draw ratio, and $v_{web}$ is the velocity of the melt web, and the draw rate R is defined as the time derivation of the draw ratio r.

**25.** Method according to Claim 24, **characterized in that** the length of the free melt web is used as control variable to ensure high anisotropies.

**26.** Method according to Claim 24 or 25, **characterized in that**, in order to ensure high anisotropies, a high draw ratio of the free melt web is used as control variable.

**Revendications**

**1.** Procédé de préparation de masses autoadhésives présentant une anisotropie élevée, qui comprend comme éléments de procédé un dispositif d'alimentation de masse adhésive, un dispositif d'application et un élément de dépôt, un ruban libre de masse fondue de à masse autoadhésive étant formé entre la sortie du dispositif d'application et le point de contact sur l'élément de dépôt, qui subit un processus d'étirement, **caractérisé en ce que** l'étirement de la masse autoadhésive dans le ruban libre de masse fondue est contrôlé via un rapport d'action $\Gamma$, qui est **caractérisé par** le rapport du temps d'action $\Delta t$ du processus d'étirement au taux d'étirement R et qui est réglé à une valeur d'au moins 0,006 $s^2$ ou à une valeur d'au maximum 0,004 $s^2$, le temps d'action $\Delta t$ étant défini par la formule $2Lr/[v_{bande}(1+r)]$, dans laquelle L signifie la longueur du ruban de masse fondue, r le rapport d'étirement et $v_{bande}$ la vitesse du ruban de masse fondue et le taux d'étirement R étant défini comme la dérivation dans le temps du rapport d'étirement r.

2. Procédé selon la revendication 1, **caractérisé en ce que** le rapport d'action $\Gamma$ est réglé à une valeur d'au moins 0,006 $s^2$, de préférence à une valeur d'au moins 0,008 $s^2$.

3. Procédé selon l'une quelconque des revendications 1 ou 2, **caractérisé en ce que** le rapport $\Gamma$ pour la masse autoadhésive dans le ruban de masse fondue est réalisé de manière telle que la longueur du ruban de masse fondue est élevée et est d'au moins 40 mm, de préférence d'au moins 75 mm, de manière tout à fait préférée d'au moins 100 mm.

4. Procédé selon la revendication 1, **caractérisé en ce que** le rapport d'action $\Gamma$ est réglé une valeur d'au plus 0,004 $s^2$, de préférence à une valeur d'au plus 0,002 $s^2$.

5. Procédé selon l'une quelconque des revendications 1 ou 4, **caractérisé en ce que** le rapport $\Gamma$ pour la masse autoadhésive dans le ruban de masse fondue est réalisé de manière telle que la longueur du ruban de masse fondue est basse et est d'au plus 40 mm, de préférence d'au plus 25 mm, de manière tout à fait préférée d'au plus 15 mm.

6. Procédé selon l'une quelconque des revendications 1 à 5, **caractérisé en ce que** le temps d'action $\Delta t$ présente une valeur d'au moins 0,01 s, de préférence d'au moins 0,1 s, de manière particulièrement préférée d'au moins 0,25 s.

7. Procédé selon l'une quelconque des revendications 1 à 6, **caractérisé en ce que** la masse autoadhésive dans le ruban de masse fondue est soumise à un taux d'étirement R d'au moins 1 $s^{-1}$, de préférence d'au moins 10 $s^{-1}$, de préférence d'au moins 25 $s^{-1}$.

8. Procédé selon l'une quelconque des revendications 1 à 7, **caractérisé en ce que** le rapport d'étirement r de la masse autoadhésive dans le ruban de masse fondue, qui est défini par $D/d = v_{bande}/v_0$, où D est la hauteur de la fente de sortie du dispositif d'application et d l'épaisseur de couche du film de masse autoadhésive déposé sur l'élément de dépôt et $v_0$ la vitesse au niveau de la fente de sortie, est d'au moins 2:1, de préférence d'au moins 4:1, de manière particulièrement préférée d'au moins 6:1.

9. Procédé selon l'une quelconque des revendications 1 à 8, **caractérisé en ce que** la hauteur de la fente de sortie D est d'au moins 150 $\mu$m, de manière particulièrement préférée d'au moins 300 $\mu$m, de manière tout particulièrement préférée d'au moins 600 $\mu$m.

10. Procédé selon l'une quelconque des revendications 1 à 9, **caractérisé en ce que** l'épaisseur de couche d des masses autoadhésives est de préférence située entre 1 $\mu$m et 2000 $\mu$m, de manière particulièrement préférée entre 5 $\mu$m et 1000 $\mu$m.

11. Procédé selon l'une quelconque des revendications 1 à 10, **caractérisé en ce que** la température de revêtement est située entre au moins 25°C et au plus 250°C, de préférence entre au moins 50°C et au plus 200°C.

12. Procédé selon l'une quelconque des revendications 1 à 11, **caractérisé en ce que** le film de masse autoadhésive, après qu'il a quitté le dispositif d'application, est refroidi, de préférence par le passage d'un milieu de refroidissement d'un type quelconque et/ou d'un appareil de refroidissement d'un type quelconque.

13. Procédé selon la revendication 12, **caractérisé en ce qu'**on utilise un cylindre de refroidissement pour le refroidissement, qui est exploité à une température d'au plus 60°C, de préférence d'au plus 30°C.

14. Procédé selon l'une quelconque des revendications 1 à 13, **caractérisé en ce qu'**on utilise comme dispositif d'alimentation de la masse des systèmes qui, individuellement ou en combinaison, ramollissent suffisamment, si nécessaire, des masses autoadhésives en masse fondue de préférence exemptes de solvant ou du moins qui les équilibrent thermiquement et les transportent, de préférence des systèmes de fusion à tambour, des dispositifs de préfusion et/ou des extrudeuses, le cas échéant couplés à des pompes à masse fondue.

15. Procédé selon l'une quelconque des revendications 1 à 14, **caractérisé en ce qu'**on utilise comme dispositif d'application une unité de revêtement qui forme, en tant que procédé sans contact, un ruban de masse fondue, de préférence des filières à fente telles que par exemple des filières d'extrusion ou des filières de revêtement à rideau telles que par exemple des filières de coulage.

16. Procédé selon l'une quelconque des revendications 1 à 15, **caractérisé en ce qu'**on utilise comme moyen de dépôt de préférence des corps en forme de rouleau ou de cylindre qui conviennent pour guider une brande de produit, où le point de contact peut se trouver sur n'importe quel point de surface d'un seul corps cylindrique ou dans la fente entre deux corps cylindriques et où le film libre de masse autoadhésive est placé directement sur un matériau support ou est d'abord déposé sur une surface antiadhésive appropriée et seulement transféré sur un matériau support ultérieurement au cours du procédé.

17. Procédé selon l'une quelconque des revendications 1 à 16, **caractérisé en ce qu'**après le dépôt du film de masse autoadhésive sur le moyen de dépôt, il est de préférence séché dans un canal de séchage.

18. Procédé selon l'une quelconque des revendications 1 à 17, **caractérisé en ce que** l'étape de revêtement est suivie d'une réticulation de la masse autoadhésive anisotropique, le processus de réticulation étant de préférence réalisé au plus tard 25 s après le dépôt du film de masse autoadhésive sur le moyen de dépôt, de manière tout à fait préférée au plus tard 10 s après le dépôt du film de masse autoadhésive sur le point de contact, de préférence par un rayonnement UV, un rayonnement électronique et/ou d'énergie thermique.

19. Procédé selon l'une quelconque des revendications 1 à 17, **caractérisé en ce qu'**on réalise pendant l'étape de revêtement une réticulation de la masse autoadhésive anisotropique, de préférence au moyen d'un rayonnement UV, d'un rayonnement électronique et/ou d'énergie thermique.

20. Procédé selon l'une quelconque des revendications 1 à 19, **caractérisé en ce que** les masses autoadhésives, dans les conditions de procédé, à la sortie du dispositif d'application, représentent des fluides non newtoniens avec un caractère à viscosité de structure.

21. Procédé selon l'une quelconque des revendications 1 à 20, **caractérisé en ce que** la masse autoadhésive

   - présente une structure linéaire, ramifiée, greffée ou autre,
   - est de préférence un homopolymère, un copolymère statistique ou un copolymère à blocs,
   - présente une masse molaire d'au moins 100 000 g/mole, de préférence d'au moins 250 000 g/mole, de manière tout à fait préférée d'au moins 500 000 g/mole et/ou
   - présente une température de ramollissement d'au plus 20°C.

22. Procédé selon l'une quelconque des revendications 1 à 21, **caractérisé en ce que** la masse autoadhésive est à base de copolymères d'acrylate, de caoutchoucs naturels, de caoutchoucs de synthèse ou de copolymères d'éthylène-acétate de vinyle ou de leurs mélanges.

23. Procédé selon l'une quelconque des revendications 1 à 22, **caractérisé en ce que** la masse autoadhésive contient d'autres constituants, tels que des résines, des plastifiants, des additifs à activité rhéologique, des catalyseurs, des initiateurs, des stabilisateurs, des agents de compatibilisation, des réactifs de couplage, des réticulants, des antioxydants, d'autres agents de protection contre le vieillissement, des agents de protection contre la lumière, des agents ignifuges, des pigments, des colorants, des charges et/ou des agents gonflants ainsi qu'éventuellement des solvants.

24. Procédé pour le réglage d'une anisotropie définie dans des masses autoadhésives pendant leur préparation, qui comprend comme éléments de procédé un dispositif d'alimentation de masse adhésive, un dispositif d'application et un élément de dépôt, un ruban libre de masse fondue de la masse autoadhésive étant formé entre la sortie du dispositif d'application et le point de contact sur l'élément de dépôt, qui subit un processus d'étirement, **caractérisé en ce que** l'étirement de la masse autoadhésive dans le ruban libre de masse fondue est contrôlé via un rapport d'action $\Gamma$, qui est **caractérisé par** le rapport du temps d'action $\Delta t$ du processus d'étirement au taux d'étirement R, le temps d'action $\Delta t$ étant défini par la formule $2Lr/[v_{bande}(1+r)]$, dans laquelle L signifie la longueur du ruban de masse fondue, r le rapport d'étirement et $v_{bande}$ la vitesse du ruban de masse fondue et le taux d'étirement R est défini comme la dérivation dans le temps du rapport d'étirement r.

25. Procédé selon la revendication 24, **caractérisé en ce que** pour assurer des anisotropies élevées, on utilise la longueur du ruban libre de masse fondue comme grandeur de réglage.

26. Procédé selon la revendication 24 ou 25, **caractérisé en ce que** pour assurer des anisotropies élevées, on utilise un rapport d'étirement élevé du ruban libre de masse fondue comme grandeur de réglage.

EP 1 948 752 B1

Fig.1

23

Fig.2

Fig.3

Fig.4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3783072 A
- DE 19905935, Johnson & Johnson
- US 6455152 B
- EP 622127 A
- US 5391406 A
- EP 377199 A
- WO 9309152 A
- DE 3942232
- DE 19524250
- DE 10157154
- US 6299821 B
- DE 3635302
- EP 515863 A
- DE 3326056
- EP 523542 A
- DE 10052955
- US 5866249 A
- US 6632522 B

**In der Beschreibung aufgeführte Nicht-Patentliteratur**

- **M. Pahl ; W. Gleißle ; H.-M. Laun.** Praktische Rheologie der Kunststoffe und Elastomere. VDI-Verlag, 1995, 337ff
- **I. M. Ward.** Structure and Properties of Oriented Polymers. Chapman & Hall, 1997
- ''Orientation''; ''Orientation Processes''. **J. L. White ; M. Cakmak.** Encyclopedia of Polymer Science and Engineering. Wiley, 1985, vol. 10
- **P. J. Mills.** Structure and Properties of Oriented Polymers. Chapman & Hall, 1997
- Taschenbuch der Physik. Verlag Harri Deutsch, 1994, 12
- **J. Fang ; M. Kröger ; H. C. Öttinger.** *J. Rheol.,* 2000, vol. 44, 1293
- **T. Dollase et al.** *Beitrag zur PSTC TECH XXVII Global Conference,* 2004
- **K. Feigl ; M. Laso ; H. C. Öttinger.** *Macromolecules,* 1995, vol. 28, 3261
- **H. C. Öttinger.** *J. Rheol.,* 1999, vol. 43, 1461